(19) Europäisches Patentamt
European Patent Office
Office européen des brevets

(11) EP 4 613 831 A1

(12) EUROPEAN PATENT APPLICATION
published in accordance with Art. 153(4) EPC

(43) Date of publication:
**10.09.2025 Bulletin 2025/37**

(21) Application number: **23891662.1**

(22) Date of filing: **16.11.2023**

(51) International Patent Classification (IPC):
***C10M 107/24*** *(2006.01)* ***C09K 5/04*** *(2006.01)*
***C10M 105/38*** *(2006.01)* ***C10N 30/00*** *(2006.01)*
***C10N 40/30*** *(2006.01)*

(52) Cooperative Patent Classification (CPC):
**C09K 5/04; C10M 105/38; C10M 107/24**

(86) International application number:
**PCT/JP2023/041336**

(87) International publication number:
**WO 2024/106515 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2022 JP 2022185131**

(71) Applicants:
- **ENEOS Corporation**
  **Chiyoda-ku**
  **Tokyo 100-8162 (JP)**
- **Daikin Industries, Ltd.**
  **Osaka-shi, Osaka 530-0001 (JP)**

(72) Inventors:
- **MIZUTANI, Yuya**
  **Tokyo 100-8162 (JP)**
- **OKAZAKI, Motoya**
  **Tokyo 100-8162 (JP)**
- **OGATA, Hidetoshi**
  **Tokyo 100-8162 (JP)**
- **KAWAGUCHI, Masaki**
  **Tokyo 100-8162 (JP)**
- **GOTO, Satoshi**
  **Tokyo 100-8162 (JP)**

(74) Representative: **Grünecker Patent- und Rechtsanwälte PartG mbB**
**Leopoldstraße 4**
**80802 München (DE)**

# (54) WORKING FLUID COMPOSITION AND REFRIGERATOR

(57) A working fluid composition containing a refrigerating machine oil and a refrigerant containing HFO-1132(E) and HFO-1234yf, wherein a refrigerant fraction at 80°C and 2.5 MPa is 80% by mass or less, and the refrigerating machine oil contains a base oil selected from a polyol ester and a polyvinyl ether, an epoxy-based acid scavenger selected from a glycidyl ester-based acid scavenger and a glycidyl ether-based acid scavenger, a phenol-based antioxidant, and a phosphorus-containing antiwear agent, and wherein a P/E ratio is 0.2 or more and 1.1 or less:

$$\text{P/E ratio} = (W_P \times N_P / M_P) / (W_E \times N_E / M_E)$$

wherein $W_P$ represents a content (% by mass) of the phosphorus-containing antiwear agent, $N_P$ represents a number of a phosphorus atom in one molecule of the phosphorus-containing antiwear agent, $M_P$ represents a molecular weight of the phosphorus-containing antiwear agent, $W_E$ represents a content (% by mass) of the epoxy-based acid scavenger, $N_E$ represents a number of an epoxy group in one molecule of the epoxy-based acid scavenger, and $M_E$ represents a molecular weight of the epoxy-based acid scavenger.

EP 4 613 831 A1

Fig.1

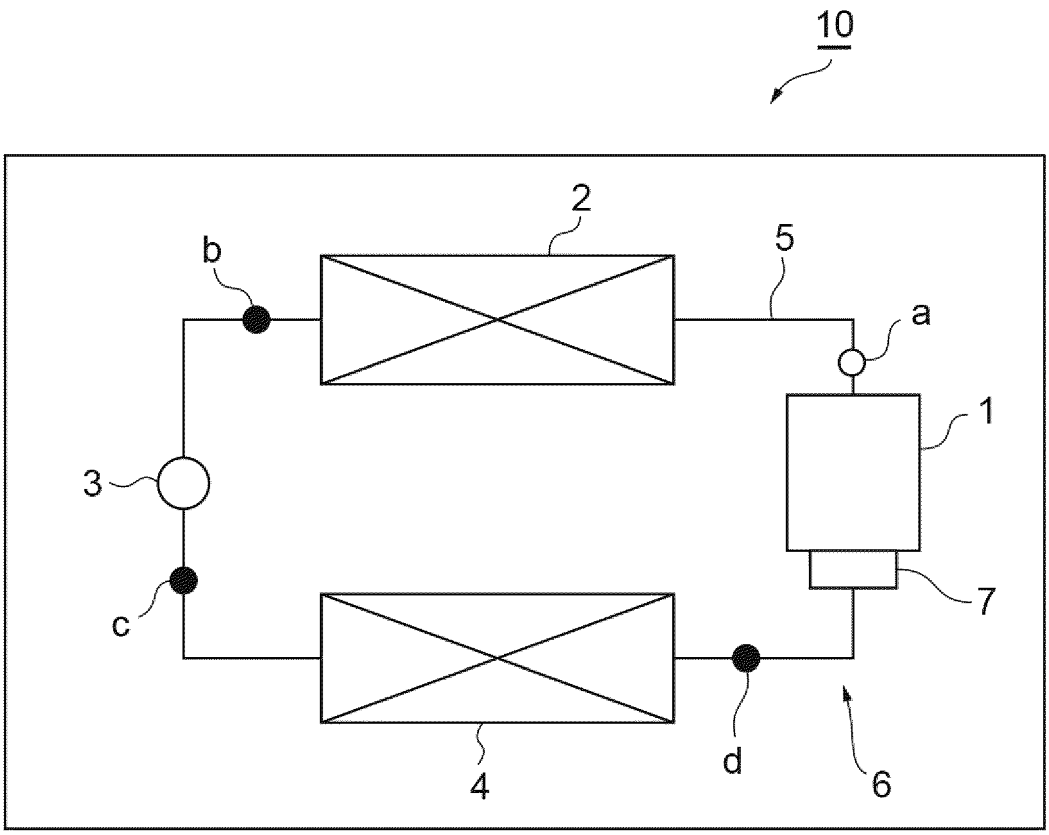

## Description

### Technical Field

The present invention relates to a working fluid composition and a refrigerating machine.

### Background Art

To prevent global warming, the development of refrigerating machines (refrigerating devices, air conditioning devices, etc.) using low GWP refrigerants with low environmental impact is becoming increasingly important. Conventionally, saturated hydrofluorocarbon refrigerants such as R404A and R134a have been used in household air conditioners or vehicle air conditioners. However, in recent years, studies have been conducted on refrigerating machines using unsaturated hydrofluorocarbon refrigerants such as HFO-1234yf as alternative refrigerants to saturated hydrofluorocarbon refrigerants (see, for example, Patent Literature 1).

### Citation List

### Patent Literature

[Patent Literature 1] JP 2010-255966 A

### Summary of Invention

### Technical Problem

A refrigerant coexists with a refrigerating machine oil for lubricating sliding members within a refrigerating machine, existing in the state of so-called a working fluid composition. The characteristics of the working fluid composition affect the characteristics of the refrigerating machine, and it is important to design the working fluid composition with desired characteristics by appropriately combining a refrigerant and a refrigerating machine oil.

One aspect of the present invention aims to provide a novel working fluid composition.

### Solution to Problem

The present inventors have completed a novel working fluid composition containing a refrigerating machine oil containing a specific base oil and additives, and a refrigerant containing trans-1,2-difluoroethylene (HFO-1132(E)) and 2,3,3,3-tetrafluoropropene (HFO-1234yf), wherein the additives satisfy specified condition and the refrigerant fraction falls within a defined range. The present inventors have also found that, in one aspect, this novel working fluid composition can increase the refrigerant dissolution viscosity under the same temperature and pressure conditions compared to a working fluid composition using HFO-1234yf alone as the refrigerant, and can exhibit superior stability compared to when using a refrigerating machine oil other than the refrigerating machine oil containing the specific base oil and additives.

The present invention includes the following aspects.

[1] A working fluid composition containing a refrigerating machine oil; and a refrigerant containing trans-1,2-difluoroethylene (HFO-1132(E)) and 2,3,3,3-tetrafluoropropene (HFO-1234yf), wherein the working fluid composition has a refrigerant fraction at 80°C and 2.5 MPa of 80% by mass or less, wherein the refrigerating machine oil contains: at least one base oil selected from the group consisting of a polyol ester and a polyvinyl ether; at least one epoxy-based acid scavenger selected from the group consisting of a glycidyl ester-based acid scavenger and a glycidyl ether-based acid scavenger; a phenol-based antioxidant; and a phosphorus-containing antiwear agent, and wherein a P/E ratio represented by the following formula (A) is 0.2 or more and 1.1 or less:

$$\text{P/E ratio} = (W_P \times N_P / M_P) / (W_E \times N_E / M_E) \quad \cdots (A)$$

wherein $W_P$ represents a content (% by mass) of the phosphorus-containing antiwear agent based on a total amount of the refrigerating machine oil, $N_P$ represents a number of a phosphorus atom in one molecule of the phosphorus-containing antiwear agent, $M_P$ represents a molecular weight of the phosphorus-containing antiwear agent, $W_E$ represents a content (% by mass) of the epoxy-based acid scavenger based on the total amount of the refrigerating machine oil, $N_E$ represents a number of an epoxy group in one molecule of the epoxy-based acid scavenger, and $M_E$

represents a molecular weight of the epoxy-based acid scavenger.

[2] The working fluid composition according to [1], wherein the working fluid composition has a refrigerant dissolution viscosity at 80°C and 2.5 MPa of 1 $mm^2/s$ or higher.

[3] The working fluid composition according to [1] or [2], wherein the working fluid composition has a two-layer separation temperature at an oil fraction of 10 to 30% by mass of -30°C or lower.

[4] The working fluid composition according to any one of [1] to [3], wherein the base oil contains the polyol ester, and the polyol ester contains an ester of a polyhydric alcohol and a fatty acid.

[5] The working fluid composition according to any one of [1] to [4], wherein the P/E ratio is 0.2 or more and 0.65 or less.

[6] A refrigerating machine containing a refrigerant circulation system containing a compressor, a condenser, an expansion mechanism, and an evaporator, wherein the refrigerant circulation system is filled with the working fluid composition according to any one of [1] to [5].

## Advantageous Effects of Invention

According to one aspect of the present invention, a novel working fluid composition can be provided. This novel working fluid composition, in one aspect, can increase the refrigerant dissolution viscosity under the same temperature and pressure conditions compared to a working fluid composition using HFO-1234yf alone as the refrigerant, and can also exhibit superior stability compared to when using a refrigerating machine oil other than the refrigerating machine oil containing the specific base oil and additives.

## Brief Description of Drawing

[Fig. 1] Fig. 1 is a schematic diagram showing one embodiment of a refrigerating machine.

[Fig. 2] Fig. 2 is a graph showing the relationship between the HFO-1132(E) fraction in a mixed refrigerant of HFO-1132(E) and HFO-1234yf and the boiling point of the mixed refrigerant.

## Description of Embodiments

Hereinafter, embodiments of the present invention will be described in detail with reference to the drawings as appropriate.

One embodiment of the present invention is a working fluid composition containing a refrigerating machine oil, and a refrigerant containing trans-1,2-difluoroethylene (HFO-1132(E)) and 2,3,3,3-tetrafluoropropene (HFO-1234yf).

The refrigerating machine oil contains a base oil, an epoxy-based acid scavenger, a phenol-based antioxidant, and a phosphorus-containing antiwear agent.

The base oil is at least one selected from the group consisting of a polyol ester and a polyvinyl ether. The polyol ester includes an ester of a polyhydric alcohol and a fatty acid. The fatty acid is preferably a saturated fatty acid. The number of carbon atoms of the fatty acids is preferably 4 to 20, more preferably 4 to 18, even more preferably 4 to 9, and particularly preferably 5 to 9. Polyol ester may be a partial ester in which some of the hydroxyl groups of the polyhydric alcohol are not esterified and remain as hydroxyl groups, a complete ester in which all the hydroxyl groups are esterified, or a mixture of partial esters and complete esters. The hydroxyl value of polyol ester is preferably 10 mg KOH/g or less, more preferably 5 mg KOH/g or less, and even more preferably 3 mg KOH/g or less.

The proportion of fatty acids having 4 to 20 carbon atoms in the fatty acids constituting the polyol ester is preferably 20 to 100% by mole, more preferably 50 to 100% by mole, even more preferably 70 to 100% by mole, and particularly preferably 90 to 100% by mole.

Specific examples of the fatty acid having 4 to 20 carbon atoms include butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, and eicosanoic acid. These fatty acids may be linear or branched. The fatty acids are preferably branched fatty acids having branches at the $\alpha$-position and/or $\beta$-position, more preferably selected from 2-methylpropanoic acid, 2-methylbutanoic acid, 2-methylpentanoic acid, 2-methylhexanoic acid, 2-ethylpentanoic acid, 2-methylheptanoic acid, 2-ethylhexanoic acid, 3,5,5-trimethylhexanoic acid, and 2-ethylhexadecanoic acid, and even more preferably selected from 2-methylpropanoic acid and 3,5,5-trimethylhexanoic acid.

The fatty acid preferably contains a branched fatty acid having 4 to 9 carbon atoms. The proportion of the branched fatty acid having 4 to 9 carbon atoms in the fatty acid is preferably 20 to 100% by mole, more preferably 50 to 100% by mole, even more preferably 70 to 100% by mole, and particularly preferably 90 to 100% by mole.

The fatty acid may contain a fatty acid other than the fatty acid having 4 to 20 carbon atoms. The fatty acid other

than the fatty acid having 4 to 20 carbon atoms may be a fatty acid having 21 to 24 carbon atoms. Examples of the fatty acid having 21 to 24 carbon atoms include heneicosanoic acid, docosanoic acid, tricosanoic acid, and tetracosanoic acid, which may be linear or branched.

The polyhydric alcohol constituting the polyol ester is preferably a polyhydric alcohol having 2 to 6 hydroxyl groups. The number of carbon atoms of the polyhydric alcohol is preferably 4 to 12, more preferably 5 to 10. The polyhydric alcohol is preferably a hindered alcohol such as neopentyl glycol, trimethylol ethane, trimethylol propane, trimethylol butane, di-(trimethylol propane), tri-(trimethylol propane), pentaerythritol, and dipentaerythritol, and more preferably pentaerythritol, dipentaerythritol, or a mixed alcohol of pentaerythritol and dipentaerythritol, from the viewpoint of excellent compatibility with the refrigerant and hydrolytic stability.

The polyol ester may contain a complex ester. The complex ester may be a complex ester synthesized by the following methods (C1) or (C2).

(C1) A method of synthesizing an ester intermediate in which some of the carboxyl groups of a polybasic acid remain unesterified by adjusting the molar ratio of a polyhydric alcohol and a polybasic acid, and then esterifying the remaining carboxyl groups with a monohydric alcohol.
(C2) A method of synthesizing an ester intermediate in which some of the hydroxyl groups of a polyhydric alcohol remain unesterified by adjusting the molar ratio of a polyhydric alcohol and a polybasic acid, and then esterifying the remaining hydroxyl groups with a monocarboxylic fatty acid.

The complex ester obtained by the method (C1) is superior in stability compared to the complex ester obtained by the method (C2) because it can suppress the generation of strong acids due to hydrolysis when used as refrigerating machine oils. Therefore, the complex ester is preferably the complex ester obtained by the method (C1) with higher stability.

The complex ester is preferably an ester synthesized from at least one polyhydric alcohol selected from polyhydric alcohols having 2 to 4 hydroxyl groups, at least one polybasic acid selected from polybasic acids having 6 to 12 carbon atoms, at least one monohydric alcohol selected from monohydric alcohols having 4 to 18 carbon atoms, and at least one monocarboxylic fatty acid selected from monocarboxylic fatty acids having 2 to 12 carbon atoms.

Examples of the polyhydric alcohol having 2 to 4 hydroxyl groups include neopentyl glycol, trimethylol propane, and pentaerythritol. Polyhydric alcohols having 2 to 4 hydroxyl groups are preferably selected from neopentyl glycol and trimethylol propane from the viewpoint of ensuring suitable viscosity when using complex esters as base oils and obtaining good low-temperature properties, and more preferably neopentyl glycol from the viewpoint of wide viscosity adjustment.

From the viewpoint of excellent lubricity, the polyhydric alcohol constituting the complex ester may further contain a divalent alcohol having 2 to 10 carbon atoms other than neopentyl glycol, in addition to the polyhydric alcohol having 2 to 4 hydroxyl groups. Examples of the divalent alcohol having 2 to 10 carbon atoms other than neopentyl glycol include ethylene glycol, propanediol, butanediol, pentanediol, hexanediol, 2-methyl-1,3-propanediol, 3-methyl-1,5-pentanediol, and 2,2-diethyl-1,3-pentanediol. From the viewpoint of excellent base oil properties, the butanediol is preferable. Examples of the butanediol include 1,2-butanediol, 1,3-butanediol, 1,4-butanediol, and 2,3-butanediol. From the viewpoint of obtaining good properties, the butanediol is preferably selected from 1,3-butanediol and 1,4-butanediol. The amount of the divalent alcohol having 2 to 10 carbon atoms other than neopentyl glycol is preferably 1.2 mol or less, more preferably 0.8 mol or less, and even more preferably 0.4 mol or less per 1 mol of the polyhydric alcohol having 2 to 4 hydroxyl groups.

Examples of the polybasic acid having 6 to 12 carbon atoms include adipic acid, pimelic acid, suberic acid, azelaic acid, sebacic acid, phthalic acid, and trimellitic acid. From the viewpoint of balancing the properties of the synthesized ester and ease of availability, the polybasic acids are preferably selected from adipic acid and sebacic acid, and more preferably adipic acid. The amount of the polybasic acid having 6 to 12 carbon atoms is preferably 0.4 mol to 4 mol, more preferably 0.5 mol to 3 mol, and even more preferably 0.6 mol to 2.5 mol per 1 mol of polyhydric alcohol having 2 to 4 hydroxyl groups.

Examples of the monohydric alcohol having 4 to 18 carbon atoms include butanol, pentanol, hexanol, heptanol, octanol, nonanol, decanol, dodecanol, and oleyl alcohol. These monohydric alcohols may be linear or branched. From the viewpoint of balancing properties, the monohydric alcohols having 4 to 18 carbon atoms are preferably monohydric alcohols having 6 to 10 carbon atoms, more preferably monohydric alcohols having 8 to 10 carbon atoms. From the viewpoint of obtaining good low-temperature properties, the monohydric alcohols are preferably selected from 2-ethylhexanol and 3,5,5-trimethylhexanol.

Examples of the monocarboxylic fatty acid having 2 to 12 carbon atoms include acetic acid, propionic acid, butanoic acid, pentanoic acid, hexanoic acid, heptanoic acid, octanoic acid, nonanoic acid, decanoic acid, and dodecanoic acid. These monocarboxylic fatty acids may be linear or branched. From the viewpoint of low-temperature properties, the monocarboxylic fatty acid having 2 to 12 carbon atoms is preferably a monocarboxylic fatty acid having 8 to 10 carbon atoms, and more preferably 2-ethylhexanoic acid and 3,5,5-trimethylhexanoic acid.

The polyvinyl ether has a structural unit represented by the following formula (1):

[Chem. 1]

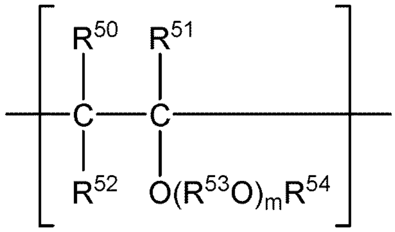

(1)

wherein $R^{50}$, $R^{51}$, and $R^{52}$ may be the same or different and each represents a hydrogen atom or a hydrocarbon group, $R^{53}$ represents a divalent hydrocarbon group or a divalent ether-bond-containing hydrocarbon group, $R^{54}$ represents a hydrocarbon group, and m represents an integer of 0 or more. When m is 2 or more, multiple $R^{53}$s may be the same or different.

The number of carbon atoms of the hydrocarbon groups represented by $R^{50}$, $R^{51}$, and $R^{52}$ is preferably 1 or more, more preferably 2 or more, and even more preferably 3 or more, and preferably 8 or less, more preferably 7 or less, and even more preferably 6 or less. It is preferable that at least one of $R^{50}$, $R^{51}$, and $R^{52}$ is a hydrogen atom, and it is more preferable that all of $R^{50}$, $R^{51}$, and $R^{52}$ are hydrogen atoms.

The number of carbon atoms of the divalent hydrocarbon group and the ether-bond-containing hydrocarbon group represented by $R^{53}$ is preferably 1 or more, more preferably 2 or more, and even more preferably 3 or more, and preferably 10 or less, more preferably 8 or less, and even more preferably 6 or less. The divalent ether-bond-containing hydrocarbon group represented by $R^{53}$ may be, for example, a hydrocarbon group having an oxygen forming an ether bond in a side chain.

$R^{54}$ is preferably a hydrocarbon group having 1 to 20 carbon atoms. Examples of such a hydrocarbon group include alkyl groups, cycloalkyl groups, phenyl groups, aryl groups, and arylalkyl groups. The hydrocarbon group is preferably an alkyl group, more preferably an alkyl group having 1 to 5 carbon atoms.

m is preferably 0 or more, more preferably 1 or more, and even more preferably 2 or more, and preferably 20 or less, more preferably 18 or less, and even more preferably 16 or less. The average value of m in all structural units constituting the polyvinyl ether is preferably 0 to 10.

The polyvinyl ether may be a homopolymer composed of one type of structural unit represented by the formula (1), a copolymer composed of two or more types of structural units represented by the formula (1), or a copolymer composed of structural units represented by the formula (1) and other structural units. By being a copolymer, the polyvinyl ether can further improve lubricity, insulation, and hygroscopicity while satisfying compatibility of the refrigerating machine oil with the refrigerant. In this case, by appropriately selecting the types of monomers used as raw materials, the types of initiators, the ratio of structural units in the copolymer, etc., it is possible to achieve the desired properties of the refrigerating machine oil. The copolymer may be a block copolymer or a random copolymer.

When the polyvinyl ether is a copolymer, the copolymer preferably has structural unit (1-1) represented by the formula (1) in which $R^{54}$ is an alkyl group having 1 to 3 carbon atoms and structural unit (1-2) represented by the formula (1) in which $R^{54}$ is an alkyl group having 3 to 20 carbon atoms. The number of carbon atoms of $R^{54}$ in structural unit (1-2) is preferably 3 to 10, more preferably 3 to 8. $R^{54}$ in structural unit (1-1) is particularly preferably an ethyl group, and $R^{54}$ in structural unit (1-2) is particularly preferably an isobutyl group. When polyvinyl ether is a copolymer having the above structural units (1-1) and (1-2), the molar ratio of structural unit (1-1) to structural unit (1-2) is preferably 5:95 to 95:5, more preferably 20:80 to 90:10, and even more preferably 70:30 to 90:10. When the molar ratio is within the above range, compatibility with the refrigerant can be further improved, and hygroscopicity can be reduced.

The polyvinyl ether may be composed only of structural unit(s) represented by the formula (1), but it may also be a copolymer further having a structural unit represented by the following formula (2). In this case, the copolymer may be a block copolymer or a random copolymer.

[Chem. 2]

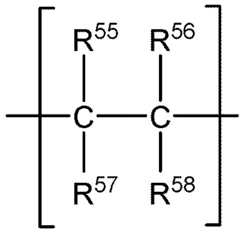

(2)

wherein $R^{55}$ to $R^{58}$ may be the same or different and each represents a hydrogen atom or a hydrocarbon group having 1 to 20 carbon atoms.

The polyvinyl ether is produced, for example, by polymerizing a vinyl ether monomer corresponding to the structural unit represented by the formula (1), or by copolymerizing a vinyl ether monomer corresponding to the structural unit represented by the formula (1) and a hydrocarbon monomer having an olefinic double bond corresponding to the structural unit represented by the formula (2). As the vinyl ether monomer corresponding to the structural unit represented by the formula (1), a monomer represented by the following formula (3) is preferable.

[Chem. 3]

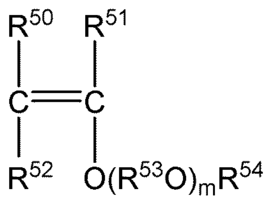

(3)

wherein $R^{50}$, $R^{51}$, $R^{52}$, $R^{53}$, $R^{54}$, and m have the same definitions as in the formula (1).

The polyvinyl ether preferably has the following terminal structure (I) or (II).

(I) A structure in which one terminal is represented by the formula (4) or (5) and the other terminal is represented by the formula (6) or (7).

[Chem. 4]

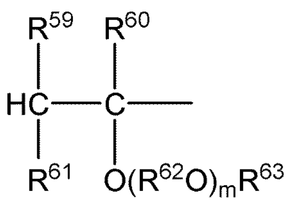

(4)

In the formula (4), $R^{59}$, $R^{60}$, and $R^{61}$ may be the same or different and each represents a hydrogen atom or a hydrocarbon group having 1 to 8 carbon atoms, $R^{62}$ represents a divalent hydrocarbon group having 1 to 10 carbon atoms or a divalent ether-bond-containing hydrocarbon group, $R^{63}$ represents a hydrocarbon group having 1 to 20 carbon atoms, and m has the same definition as in the formula (1). When m is 2 or more, multiple $R^{62}$s may be the same or different.

[Chem. 5]

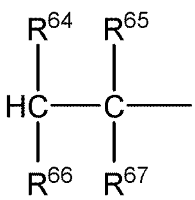

(5)

In the formula (5), $R^{64}$, $R^{65}$, $R^{66}$, and $R^{67}$ may be the same or different and each represents a hydrogen atom or a hydrocarbon group having 1 to 20 carbon atoms.

[Chem. 6]

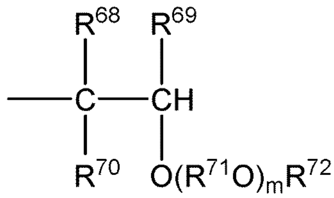

(6)

In the formula (6), $R^{68}$, $R^{61}$, and $R^{70}$ may be the same or different and each represents a hydrogen atom or a hydrocarbon group having 1 to 8 carbon atoms, $R^{71}$ represents a divalent hydrocarbon group having 1 to 10 carbon atoms or a divalent ether-bond-containing hydrocarbon group, $R^{72}$ represents a hydrocarbon group having 1 to 20 carbon atoms, and m has the same definition as in the formula (1). When m is 2 or more, multiple $R^{71}$'s may be the same or different.

[Chem. 7]

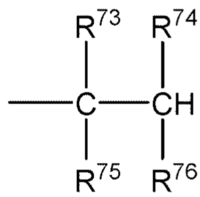

(7)

In the formula (7), $R^{73}$, $R^{74}$, $R^{75}$, and $R^{76}$ may be the same or different and each represents a hydrogen atom or a hydrocarbon group having 1 to 20 carbon atoms.

(II) A structure in which one terminal is represented by the formula (4) or (5) and the other terminal is represented by the following formula (8).

[Chem. 8]

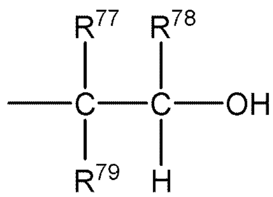

(8)

In the formula (8), $R^{77}$, $R^{78}$, and $R^{79}$ may be the same or different and each represents a hydrogen atom or a hydrocarbon group having 1 to 8 carbon atoms.

Among such polyvinyl ethers, polyvinyl ethers (P1), (P2), (P3), (P4), and (P5) listed below are particularly suitable as base oils.

(P1) A polyvinyl ether having a structure in which one terminal is represented by the formula (4) or (5) and the other terminal is represented by the formula (6) or (7), and in the formula (1), $R^{50}$, $R^{51}$, and $R^{52}$ are all hydrogen atoms, m is an integer of 0 to 4, $R^{53}$ is a divalent hydrocarbon group having 2 to 4 carbon atoms, and $R^{54}$ is a hydrocarbon group having 1 to 20 carbon atoms.
(P2) A polyvinyl ether having only structural units represented by the formula (1), a structure in which one terminal is represented by the formula (4) and the other terminal is represented by the formula (6), and in the formula (1), $R^{50}$, $R^{51}$, and $R^{52}$ are all hydrogen atoms, m is an integer of 0 to 4, $R^{53}$ is a divalent hydrocarbon group having 2 to 4 carbon atoms, and $R^{54}$ is a hydrocarbon group having 1 to 20 carbon atoms.
(P3) A polyvinyl ether having a structure in which one terminal is represented by the formula (4) or (5) and the other terminal is represented by the formula (8), and in the formula (1), $R^{50}$, $R^{51}$, and $R^{52}$ are all hydrogen atoms, m is an

integer of 0 to 4, $R^{53}$ is a divalent hydrocarbon group having 2 to 4 carbon atoms, and $R^{54}$ is a hydrocarbon group having 1 to 20 carbon atoms.

(P4) A polyvinyl ether having only structural units represented by the formula (1), a structure in which one terminal is represented by the formula (5) and the other terminal is represented by the formula (8), and in the formula (1), $R^{50}$, $R^{51}$, and $R^{52}$ are all hydrogen atoms, m is an integer of 0 to 4, $R^{53}$ is a divalent hydrocarbon group having 2 to 4 carbon atoms, and $R^{54}$ is a hydrocarbon group having 1 to 20 carbon atoms.

(P5) A polyvinyl ether having structural units in which $R^{54}$ in the formula (1) is a hydrocarbon group having 1 to 3 carbon atoms and structural units in which $R^{54}$ is a hydrocarbon group having 3 to 20 carbon atoms, selected from any of (P1), (P2), (P3), and (P4).

The weight average molecular weight of the polyvinyl ether is preferably 500 or more, more preferably 600 or more, and preferably 3000 or less, more preferably 2000 or less, and even more preferably 1500 or less. When the weight average molecular weight of polyvinyl ether is 500 or more, the refrigerating machine oil exhibits excellent lubricity under coexistence with the refrigerant. When the weight average molecular weight is 3000 or less, the composition range showing compatibility with the refrigerant under low-temperature conditions becomes wider, and poor lubrication of the refrigerant compressor and inhibition of heat exchange in the evaporator can be suppressed.

The number average molecular weight of the polyvinyl ether is preferably 500 or more, more preferably 600 or more, and preferably 3000 or less, more preferably 2000 or less, and even more preferably 1500 or less. When the number average molecular weight of the polyvinyl ether is 500 or more, the refrigerating machine oil exhibits excellent lubricity under coexistence with the refrigerant. When the number average molecular weight is 3000 or less, the composition range showing compatibility with the refrigerant under low-temperature conditions becomes wider, and poor lubrication of the refrigerant compressor and inhibition of heat exchange in the evaporator can be suppressed.

The weight average molecular weight and number average molecular weight of the polyvinyl ether refer to the weight average molecular weight and number average molecular weight (polystyrene (standard sample) equivalent values) obtained by GPC analysis. The weight average molecular weight and number average molecular weight can be measured, for example, as follows.

Using chloroform as a solvent, a solution with a polyvinyl ether concentration of 1% by mass is prepared by dilution. The solution is analyzed using a GPC device (Waters Alliance 2695). The solvent flow rate is 1 ml/min, a column capable of analyzing molecular weights from 100 to 10000 is used, and analysis is performed using a refractive index detector. The relationship between column retention time and molecular weight is determined using a polystyrene standard with a known molecular weight, and a calibration curve is created separately. The molecular weight of the sample is determined from the obtained retention time.

The unsaturation degree of the polyvinyl ether is preferably 0.04 meq/g or less, more preferably 0.03 meq/g or less, and even more preferably 0.02 meq/g or less. The peroxide value of the polyvinyl ether is preferably 10.0 meq/kg or less, more preferably 5.0 meq/kg or less, and even more preferably 1.0 meq/kg or less. The carbonyl value of the polyvinyl ether is preferably 100 ppm by weight or less, more preferably 50 ppm by weight or less, and even more preferably 20 ppm by weight or less. The hydroxyl value of the polyvinyl ether is preferably 10 mg KOH/g or less, more preferably 5 mg KOH/g or less, and even more preferably 3 mg KOH/g or less.

The unsaturation degree, peroxide value, and carbonyl value in this specification refer to the values measured by the standard oil and fat analysis test methods established by the Japan Oil Chemists' Society. Specifically, the unsaturation degree in this specification refers to the value (meq/g) obtained by reacting the sample with Wijs solution (ICl-acetic acid solution), leaving it in the dark, then reducing the excess ICl to iodine, titrating the iodine with sodium thiosulfate to calculate the iodine value, and converting this iodine value to vinyl equivalents. The peroxide value in this specification refers to the value (meq/kg) obtained by adding potassium iodide to the sample, titrating the resulting free iodine with sodium thiosulfate, and converting the free iodine to milliequivalents per kilogram of the sample. The carbonyl value in this specification refers to the value (ppm by weight) obtained by reacting the sample with 2,4-dinitrophenylhydrazine to produce a colored quinonoid ion, measuring the absorbance of the sample at 480 nm, and converting the carbonyl amount based on a calibration curve obtained using cinnamaldehyde as a standard substance. The hydroxyl value in this specification refers to the hydroxyl value measured according to JIS K0070:1992.

The kinematic viscosity at 40°C of the base oil is preferably 3 $mm^2/s$ or higher, more preferably 4 $mm^2/s$ or higher, and even more preferably 5 $mm^2/s$ or higher, and preferably 1000 $mm^2/s$ or lower, more preferably 500 $mm^2/s$ or lower, and even more preferably 400 $mm^2/s$ or lower. The kinematic viscosity at 100°C of the base oil is preferably 1 $mm^2/s$ or higher, more preferably 2 $mm^2/s$ or higher, and preferably 100 $mm^2/s$ or lower, more preferably 50 $mm^2/s$ or lower. The kinematic viscosity in this specification refers to the kinematic viscosity measured according to JIS K2283:2000.

The content of the base oil may be 50% by mass or more, 60% by mass or more, 70% by mass or more, 80% by mass or more, or 90% by mass or more, based on the total amount of the refrigerating machine oil.

The epoxy-based acid scavenger is at least one selected from a glycidyl ester-based acid scavenger and a glycidyl ether-based acid scavenger.

The glycidyl ester-based acid scavenger may be a compound represented by the following formula (E1):

[Chem. 9]

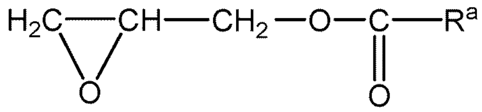

(E1)

wherein $R^a$ represents an aryl group, an alkyl group, or an alkenyl group.

The number of carbon atoms in the alkyl group represented by $R^a$ may be 5 or more and may be 18 or less. When the number of carbon atoms is 5 or more, the stability of the acid scavenger can be ensured, and it is possible to suppress decomposition before reacting with water, fatty acids, or oxidative degradation products, or self-polymerization in which acid scavengers polymerize with each other, thereby making it easier to obtain the intended function. When the number of carbon atoms is 18 or less, the solubility with the refrigerant can be favorably maintained, and it is possible to prevent precipitation in the refrigerating machine, which may otherwise cause problems such as poor cooling.

Specific examples of the glycidyl ester-based acid scavenger represented by the formula (E1) include glycidyl benzoate, glycidyl neodecanoate, glycidyl-2,2-dimethyloctanoate, glycidyl acrylate, and glycidyl methacrylate.

The glycidyl ether-based acid scavenger may be a compound represented by the following formula (E2):

[Chem. 10]

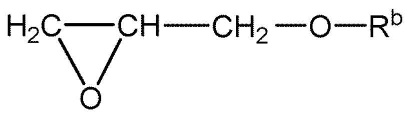

(E2)

wherein $R^b$ represents an aryl group or an alkyl group.

The number of carbon atoms in the alkyl group represented by $R^b$ may be 5 or more and may be 18 or less. When the number of carbon atoms is 5 or more, the stability of the acid scavenger can be ensured, and it is possible to suppress decomposition before reacting with water, fatty acids, or oxidative degradation products, or self-polymerization in which acid scavengers polymerize with each other, thereby making it easier to obtain the intended function. When the number of carbon atoms is 18 or less, the solubility with the refrigerant can be favorably maintained, and it is possible to prevent precipitation in the refrigerating machine, which may otherwise cause problems such as poor cooling.

Specific examples of the glycidyl ether-based acid scavenger represented by the formula (E2) include n-butylphenyl glycidyl ether, i-butylphenyl glycidyl ether, sec-butylphenyl glycidyl ether, tert-butylphenyl glycidyl ether, pentylphenyl glycidyl ether, hexylphenyl glycidyl ether, heptylphenyl glycidyl ether, octylphenyl glycidyl ether, nonylphenyl glycidyl ether, decylphenyl glycidyl ether, decyl glycidyl ether, undecyl glycidyl ether, dodecyl glycidyl ether, tridecyl glycidyl ether, tetradecyl glycidyl ether, and 2-ethylhexyl glycidyl ether.

The glycidyl ether-based acid scavenger may be a compound other than the compound represented by the formula (E2). Specific examples of such a glycidyl ether-based acid scavenger include neopentyl glycol diglycidyl ether, trimethylolpropane triglycidyl ether, pentaerythritol tetraglycidyl ether, 1,6-hexanediol diglycidyl ether, sorbitol polyglycidyl ether, polyalkylene glycol monoglycidyl ether, and polyalkylene glycol diglycidyl ether.

The content of the epoxy-based acid scavenger may be 0.01% by mass or more, 0.03% by mass or more, or 0.1% by mass or more, and may be 5% by mass or less, 3% by mass or less, or 1% by mass, based on the total amount of the refrigerating machine oil.

When the refrigerating machine oil contains the epoxy-based acid scavenger, suitable stability under coexistence with a refrigerant containing trans-1,2-difluoroethylene (HFO-1132(E)) and 2,3,3,3-tetrafluoropropene (HFO-1234yf) can be obtained. However, under coexistence with the refrigerant, the epoxy-based acid scavenger in the refrigerating machine oil tends to be consumed more easily compared to coexistence with a refrigerant containing only HFO-1234yf. Therefore, it may be effective to increase the content of the epoxy-based acid scavenger. Specifically, the amount of acid scavenger contained in the refrigerating machine oil may be, for example, 1 times or more, 1.2 times or more, 1.4 times or more, 1.5 times or more, or 2 times or more, and may be 10 times or less, 5 times or less, 3 times or less, or 2 times or less compared to the amount of the epoxy-based acid scavenger in the refrigerating machine oil used under coexistence with a refrigerant containing only HFO-1234yf.

The phenol-based antioxidant may be a known phenol-based antioxidant. Specific examples of the phenol-based antioxidant include 2,6-di-tert-butyl-p-cresol (DBPC), 2,6-di-tert-butylphenol, and 4,4'-methylenebis(2,6-di-tert-butylphenol).

The content of the phenol-based antioxidant may be 0.01% by mass or more, 0.1% by mass or more, 0.2% by

mass or more, or 0.3% by mass or more, and may be 5% by mass or less, 3% by mass or less, or 1% by mass or less, based on the total amount of the refrigerating machine oil.

Examples of the phosphorus-containing antiwear agent (also called a phosphorus-containing extreme pressure agent) include phosphorus antiwear agents (phosphorus extreme pressure agents) and phosphorus-sulfur antiwear agents (phosphorus-sulfur extreme pressure agents). Examples of the phosphorus antiwear agents include phosphate esters, acidic phosphate esters, amine salts of acidic phosphate esters, chlorinated phosphate esters, and phosphite esters. Examples of the phosphate esters include a triaryl phosphate such as tricresyl phosphate (TCP), triphenyl phosphate (TPP), an alkylated triphenyl phosphate, and a trialkyl phosphate. Examples of phosphorus-sulfur antiwear agents include triphenyl phosphorothionate (TPPT).

The content of the phosphorus-containing antiwear agent may be 0.01% by mass or more, 0.1% by mass or more, or 0.5% by mass or more, and may be 5% by mass or less, 3% by mass or less, or 2% by mass or less, based on the total amount of the refrigerating machine oil.

The total content of the epoxy-based acid scavenger, phenol-based antioxidant, and phosphorus-containing antiwear agent is preferably 0.5% by mass or more, 0.9% by mass or more, or 1.5% by mass or more, and may be 10% by mass or less, 5% by mass or less, or 4% by mass or less, based on the total amount of the refrigerating machine oil.

In the working fluid composition of the present embodiment, in order to obtain excellent stability, the epoxy-based acid scavenger and the phosphorus-containing antiwear agent contained in the refrigerating machine oil have a P/E ratio of 0.1 or more and 1.1 or less. The P/E ratio is the ratio of a value obtained by multiplying the content of the phosphorus-containing antiwear agent based on the total amount of the refrigerating machine oil by the number of a phosphorus atom per the molecular weight of the phosphorus-containing antiwear agent, to a value obtained by multiplying the content of the epoxy-based acid scavenger based on the total amount of the refrigerating machine oil by the number of an epoxy group per the molecular weight of the epoxy-based acid scavenger. Specifically, it is represented by the following formula (A):

$$\text{P/E ratio} = (W_P \times N_P / M_P) / (W_E \times N_E / M_E) \quad \cdots \text{(A)}$$

wherein $W_P$ represents the content (% by mass) of the phosphorus-containing antiwear agent based on the total amount of the refrigerating machine oil,
$N_P$ represents the number of the phosphorus atom in one molecule of the phosphorus-containing antiwear agent,
$M_P$ represents the molecular weight of the phosphorus-containing antiwear agent,
$W_E$ represents the content (% by mass) of the epoxy-based acid scavenger based on the total amount of the refrigerating machine oil,
$N_E$ represents the number of the epoxy group in one molecule of the epoxy-based acid scavenger, and
$M_E$ represents the molecular weight of the epoxy-based acid scavenger.

When the refrigerating machine oil contains two or more types of the phosphorus-containing antiwear agents or two or more types of the epoxy-based acid scavengers, the total value of $W_P \times N_P / M_P$ for each phosphorus-containing antiwear agent and the total value of $W_E \times N_E / M_E$ for each epoxy-based acid scavenger are used, respectively.

From the viewpoint of further improving stability, the P/E ratio may be 1.0 or less, 0.9 or less, 0.8 or less, or 0.7 or less, and is preferably 0.65 or less, 0.5 or less, 0.35 or less, or 0.2 or less, and may be 0.1 or less. From the viewpoint of further improving antiwear property, the P/E ratio is preferably 0.15 or more, 0.2 or more, 0.25 or more, 0.32 or more, or 0.35 or more.

The refrigerating machine oil may further contain, for example, a metal deactivator. Examples of the metal deactivators include benzotriazole and benzotriazole derivatives. The content of the metal deactivator may be 0.0001% by mass or more, 0.0005% by mass or more, or 0.0008% by mass or more, and may be 1% by mass or less, 0.1% by mass or less, or 0.01% by mass or less, based on the total amount of the refrigerating machine oil.

The refrigerating machine oil may further contain, for example, a friction modifier (also called an oiliness agent). Examples of the friction modifiers include ester friction modifiers, amine friction modifiers, ether friction modifiers, alcohol friction modifiers, and acid friction modifiers. The content of the friction modifier may be 0.01% by mass or more, 0.05% by mass or more, or 0.1% by mass or more, and may be 10% by mass or less, 5% by mass or less, or 1% by mass or less, based on the total amount of the refrigerating machine oil.

The refrigerating machine oil may further contain an additional additive. Examples of the additional additive include an acid scavenger other than the glycidyl ester-based acid scavenger and the glycidyl ether-based acid scavengers (an alicyclic epoxy-based acid scavenger, an $\alpha$-olefin oxide-based acid scavenger, and a carbodiimide-based acid scavenger), an antifoaming agent, a viscosity index improver, a pour point depressant, a detergent dispersant, and a rust inhibitor.

The kinematic viscosity at 40°C of the refrigerating machine oil is preferably 3 $mm^2/s$ or higher, 4 $mm^2/s$ or higher,

or 5 $mm^2/s$ or higher, and may be 1000 $mm^2/s$ or lower, 500 $mm^2/s$ or lower, or 400 $mm^2/s$ or lower. The kinematic viscosity at 100°C of the refrigerating machine oil is preferably 1 $mm^2/s$ or higher or 2 $mm^2/s$ or higher, and may be 100 $mm^2/s$ or lower or 50 $mm^2/s$ or lower.

The acid value of the refrigerating machine oil is preferably 0.1 mg KOH/g or less, more preferably 0.05 mg KOH/g or less, or 0.02 mg KOH/g or less. The acid value in this specification refers to the acid value measured according to JIS K2501:2003 "Petroleum Products and Lubricating Oils - Neutralization Test Method."

The hydroxyl value of the refrigerating machine oil is preferably 40 mg KOH/g or less, more preferably 20 mg KOH/g or less, 10 mg KOH/g or less, or 5 mg KOH/g or less, and may be 0 mg KOH/g or more or 1 mg KOH/g or more.

The peroxide value of the refrigerating machine oil is preferably 10.0 meq/kg or less, more preferably 5.0 meq/kg or less, and even more preferably 1.0 meq/kg or less.

The volume resistivity of the refrigerating machine oil is preferably $1\times10^{-6}$ TΩ·m or higher, more preferably $1\times10^{-4}$ TΩ·m or higher, $1\times10^{-3}$ TΩ·m or higher, $1\times10^{-2}$ TΩ·m or higher, $1\times10^{-1}$ TΩ·m or higher, or $1\times10$ TΩ·m or higher. The volume resistivity in this specification refers to the value measured at 25°C according to JIS C2101:1999 "Electrical Insulating Oil Test Method."

More specific examples of the refrigerating machine oils as described above are shown below. The abbreviations in the table represent the respective components. The values in parentheses in the table represent the range of content (% by mass) of each component based on the total amount of the refrigerating machine oil, and the content of the base oil is the remainder. For example, composition example 1 means a composition containing 0.1 to 5% by mass of the acid scavenger GEs, 0.1 to 2% by mass of the phenol-based antioxidant DBPC, and 0.5 to 3% by mass of the phosphorus-containing antiwear agent TAP, with the remainder being the base oil Es1. Note that the refrigerating machine oil in each composition example contains the acid scavenger and the phosphorus-containing antiwear agent such that the above-mentioned specific P/E ratio is satisfied.

[Base oil]

Es1: Ester of pentaerythritol (PE)/dipentaerythritol (DiPE) and 2-ethylhexanoic acid (iC8 acid)/3,5,5-trimethylhexanoic acid (iC9 acid)
PE/DiPE (molar ratio): 50/50 to 100/0 or 70/30 to 95/5
iC8 acid/iC9 acid (molar ratio): 20/80 to 80/20 or 40/60 to 60/40
Es2: Ester of pentaerythritol (PE)/dipentaerythritol (DiPE) and 2-methylpropanoic acid (iC4 acid)/iC8 acid and/or iC9 acid
PE/DiPE (molar ratio): 50/50 to 100/0 or 70/30 to 95/5
iC4 acid/iC8 acid and/or iC9 acid (molar ratio): 20/80 to 80/20 or 70/30 to 30/70
Es3: Ester of pentaerythritol (PE)/dipentaerythritol (DiPE) and 2-methylbutanoic acid (iC5 acid)/iC8 acid and/or iC9 acid
PE/DiPE (molar ratio): 50/50 to 100/0 or 70/30 to 95/5
iC5 acid and/or iC6 acid/iC8 acid and/or iC9 acid (molar ratio): 20/80 to 80/20 or 70/30 to 30/70
Es4: Ester of pentaerythritol (PE)/dipentaerythritol (DiPE) and n-pentanoic acid (nC5 acid) and/or n-heptanoic acid (nC7 acid)/iC8 acid and/or iC9 acid
PE/DiPE (molar ratio): 50/50 to 100/0 or 70/30 to 95/5
nC5 acid and/or nC7 acid/iC8 acid and/or iC9 acid (molar ratio): 20/80 to 80/20 or 70/30 to 30/70
Es5: Mixed ester of the following Es6 (complex ester), or mixed ester of Es6 and the ester of pentaerythritol/fatty acid ester having 4 to 9 carbon atoms of any of Es1 to Es4
Es6/Es1 to Es4 (mass ratio): 100/0 to 99/1, 5/95 to 50/50 or 10/90 to 40/60
Es6: Complex ester of neopentyl glycol, or neopentyl glycol and butanediol, adipic acid, and a monohydric fatty alcohol having 4 to 9 carbon atoms or a fatty acid having 4 to 9 carbon atoms

[Acid Scavengers]

GEs: Glycidyl ester-based acid scavenger (glycidyl neodecanoate, glycidyl 2,2-dimethyloctanoate, or glycidyl benzoate)
GEt: Glycidyl ether-based acid scavenger (2-ethylhexyl glycidyl ether or 4-tert-butylphenyl glycidyl ether)
CyE: Alicyclic epoxy-based acid scavenger (cyclohexene oxide or 3',4'-epoxycyclohexylmethyl-3,4-epoxycyclohexanecarboxylate)

Ole: α-olefin oxide-based acid scavenger (α-olefin oxides having 12 and/or 14 carbon atoms)
CDI: Carbodiimide-based acid scavenger (diisopropylcarbodiimide, bis(2,6-diisopropylphenyl)carbodiimide, or bis(2,6-diisobutylphenyl)carbodiimide)

[Phenol-based antioxidant]

DBPC: 2,6-di-tert-butyl-p-cresol
[Phosphorus-containing antiwear agent]
TAP: Triaryl/trialkyl phosphate (triphenyl phosphate, tricresyl phosphate, tri(t-butylphenyl) phosphate, tri(propylphenyl) phosphate, tributyl phosphate, or trioctyl phosphate)

[Table 1]

| Composition example | Base oil | Acid scavenger | Phenol-based antioxidant | Phosphorus-containing antiwear agent |
|---|---|---|---|---|
| 1 | Es1 | GEs(0.1-5) | DBPC(0.1-2) | TAP(0.5-3) |
| 2 | Es1 | GEs(1-2) | DBPC(0.1-2) | TAP(0.5-3) |
| 3 | Es1 | GEt(0.1-5) | DBPC(0.1-2) | TAP(0.5-3) |
| 4 | Es1 | GEt(1-2) | DBPC(0.1-2) | TAP(0.5-3) |
| 5 | Es1 | GEs(0.1-5)+CDI(0.01-1) | DBPC(0.1-2) | TAP(0.5-3) |
| 6 | Es1 | GEs(1-2)+CDI(0.01-1) | DBPC(0.1-2) | TAP(0.5-3) |
| 7 | Es1 | GEt(0.1-5)+CDI(0.01-1) | DBPC(0.1-2) | TAP(0.5-3) |
| 8 | Es1 | GEt(1-2)+CDI(0.01-1) | DBPC(0.1-2) | TAP(0.5-3) |
| 9 | Es1 | GEs(0.1-5)+GEt(0.1-5) | DBPC(0.1-2) | TAP(0.5-3) |
| 10 | Es1 | GEs(0.1-5)+CyE(0.1-5) | DBPC(0.1-2) | TAP(0.5-3) |
| 11 | Es1 | GEs(0.1-5)+Ole(0.1-5) | DBPC(0.1-2) | TAP(0.5-3) |
| 12 | Es1 | GEs(0.1-5)+CDI(0.02-0.5) | DBPC(0.1-2) | TAP(0.5-3) |
| 13 | Es1 | GEt(0.1-5)+CyE(0.1-5) | DBPC(0.1-2) | TAP(0.5-3) |
| 14 | Es1 | GEt(0.1-5)+Ole(0.1-5) | DBPC(0.1-2) | TAP(0.5-3) |
| 15 | Es1 | GEt(0.1-5)+CDI(0.02-0.5) | DBPC(0.1-2) | TAP(0.5-3) |

[Table 2]

| Composition example | Base oil | Acid scavenger | Phenol-based antioxidant | Phosphorus-containing antiwear agent |
|---|---|---|---|---|
| 16 | Es1 | GEs(0.1-5) | DBPC(0.1-2) | TAP(1-2) |
| 17 | Es1 | GEs(1-2) | DBPC(0.1-2) | TAP(1-2) |
| 18 | Es1 | GEt(0.1-5) | DBPC(0.1-2) | TAP(1-2) |
| 19 | Es1 | GEt(1-2) | DBPC(0.1-2) | TAP(1-2) |
| 20 | Es1 | GEs(0.1-5)+CDI(0.01-1) | DBPC(0.1-2) | TAP(1-2) |
| 21 | Es1 | GEs(1-2)+CDI(0.01-1) | DBPC(0.1-2) | TAP(1-2) |
| 22 | Es1 | GE1(0.1-5)+CDI(0.01-1) | DBPC(0.1-2) | TAP(1-2) |
| 23 | Es1 | GEt(1-2)+CDI(0.01-1) | DBPC(0.1-2) | TAP(1-2) |
| 24 | Es1 | GEs(0.1-5)+GEt(0.1-5) | DBPC(0.1-2) | TAP(1-2) |
| 25 | Es1 | GEs(0.1-5)+CyE(0.1-5) | DBPC(0.1-2) | TAP(1-2) |

(continued)

| Composition example | Base oil | Acid scavenger | Phenol-based antioxidant | Phosphorus-containing antiwear agent |
|---|---|---|---|---|
| 26 | Es1 | GEs(0.1-5)+Ole(0.1-5) | DBPC(0.1-2) | TAP(1-2) |
| 27 | Es1 | GEs(0.1-5)+CDI(0.02-0.5) | DBPC(0.1-2) | TAP(1-2) |
| 28 | Es1 | GEt(0.1-5)+CyE(0.1-5) | DBPC(0.1-2) | TAP(1-2) |
| 29 | Es1 | GEt(0.1-5)+Ole(0.1-5) | DBPC(0.1-2) | TAP(1-2) |
| 30 | Es1 | GEt(0.1-5)+CDI(0.02-0.5) | DBPC(0.1-2) | TAP(1-2) |

[Table 3]

| Composition example | Base oil | Acid scavenger | Phenol-based antioxidant | Phosphorus-containing antiwear agent |
|---|---|---|---|---|
| 31 | Es2 | GEs(0.1-5) | DBPC(0.1-2) | TAP(0.5-3) |
| 32 | Es2 | GEs(1-2) | DBPC(0.1-2) | TAP(0.5-3) |
| 33 | Es2 | GEt(0.1-5) | DBPC(0.1-2) | TAP(0.5-3) |
| 34 | Es2 | GEt(1-2) | DBPC(0.1-2) | TAP(0.5-3) |
| 35 | Es2 | GEs(0.1-5)+CDI(0.01-1) | DBPC(0.1-2) | TAP(0.5-3) |
| 36 | Es2 | GEs(1-2)+CDI(0.01-1) | DBPC(0.1-2) | TAP(0.5-3) |
| 37 | Es2 | GEt(0.1-5)+CDI(0.01-1) | DBPC(0.1-2) | TAP(0.5-3) |
| 38 | Es2 | GEt(1-2)+CDI(0.01-1) | DBPC(0.1-2) | TAP(0.5-3) |
| 39 | Es2 | GEs(0.1-5)+GEt(0.1-5) | DBPC(0.1-2) | TAP(0.5-3) |
| 40 | Es2 | GEs(0.1-5)+CyE(0.1-5) | DBPC(0.1-2) | TAP(0.5-3) |
| 41 | Es2 | GEs(0.1-5)+Ole(0.1-5) | DBPC(0.1-2) | TAP(0.5-3) |
| 42 | Es2 | GEs(0.1-5)+CDI(0.02-0.5) | DBPC(0.1-2) | TAP(0.5-3) |
| 43 | Es2 | GEt(0.1-5)+CyE(0.1-5) | DBPC(0.1-2) | TAP(0.5-3) |
| 44 | Es2 | GEt(0.1-5)+Ole(0.1-5) | DBPC(0.1-2) | TAP(0.5-3) |
| 45 | Es2 | GEt(0.1-5)+CDI(0.02-0.5) | DBPC(0.1-2) | TAP(0.5-3) |

[Table 4]

| Composition example | Base oil | Acid scavenger | Phenol-based antioxidant | Phosphorus-containing antiwear agent |
|---|---|---|---|---|
| 46 | Es2 | GEs(0.1-5) | DBPC(0.1-2) | TAP(1-2) |
| 47 | Es2 | GEs(1-2) | DBPC(0.1-2) | TAP(1-2) |
| 48 | Es2 | GEt(0.1-5) | DBPC(0.1-2) | TAP(1-2) |
| 49 | Es2 | GEt(1-2) | DBPC(0.1-2) | TAP(1-2) |
| 50 | Es2 | GEs(0.1-5)+CDI(0.01-1) | DBPC(0.1-2) | TAP(1-2) |
| 51 | Es2 | GEs(1-2)+CDI(0.01-1) | DBPC(0.1-2) | TAP(1-2) |
| 52 | Es2 | GE1(0.1-5)+CDI(0.01-1) | DBPC(0.1-2) | TAP(1-2) |
| 53 | Es2 | GEt(1-2)+CDI(0.01-1) | DBPC(0.1-2) | TAP(1-2) |
| 54 | Es2 | GEs(0.1-5)+GEt(0.1-5) | DBPC(0.1-2) | TAP(1-2) |
| 55 | Es2 | GEs(0.1-5)+CyE(0.1-5) | DBPC(0.1-2) | TAP(1-2) |
| 56 | Es2 | GEs(0.1-5)+Ole(0.1-5) | DBPC(0.1-2) | TAP(1-2) |

(continued)

| Composition example | Base oil | Acid scavenger | Phenol-based antioxidant | Phosphorus-containing antiwear agent |
|---|---|---|---|---|
| 57 | Es2 | GEs(0.1-5)+CDI(0.02-0.5) | DBPC(0.1-2) | TAP(1-2) |
| 58 | Es2 | GEt(0.1-5)+CyE(0.1-5) | DBPC(0.1-2) | TAP(1-2) |
| 59 | Es2 | GEt(0.1-5)+Ole(0.1-5) | DBPC(0.1-2) | TAP(1-2) |
| 60 | Es2 | GEt(0.1-5)+CDI(0.02-0.5) | DBPC(0.1-2) | TAP(1-2) |

[Table 5]

| Composition example | Base oil | Acid scavenger | Phenol-based antioxidant | Phosphorus-containing antiwear agent |
|---|---|---|---|---|
| 61 | Es3 | GEs(0.1-5) | DBPC(0.1-2) | TAP(0.5-3) |
| 62 | Es3 | GEs(1-2) | DBPC(0.1-2) | TAP(0.5-3) |
| 63 | Es3 | GEt(0.1-5) | DBPC(0.1-2) | TAP(0.5-3) |
| 64 | Es3 | GEt(1-2) | DBPC(0.1-2) | TAP(0.5-3) |
| 65 | Es3 | GEs(0.1-5)+CDI(0.01-1) | DBPC(0.1-2) | TAP(0.5-3) |
| 66 | Es3 | GEs(1-2)+CDI(0.01-1) | DBPC(0.1-2) | TAP(0.5-3) |
| 67 | Es3 | GEt(0.1-5)+CDI(0.01-1) | DBPC(0.1-2) | TAP(0.5-3) |
| 68 | Es3 | GEt(1-2)+CDI(0.01-1) | DBPC(0.1-2) | TAP(0.5-3) |
| 69 | Es3 | GEs(0.1-5)+GEt(0.1-5) | DBPC(0.1-2) | TAP(0.5-3) |
| 70 | Es3 | GEs(0.1-5)+CyE(0.1-5) | DBPC(0.1-2) | TAP(0.5-3) |
| 71 | Es3 | GEs(0.1-5)+Ole(0.1-5) | DBPC(0.1-2) | TAP(0.5-3) |
| 72 | Es3 | GEs(0.1-5)+CDI(0.02-0.5) | DBPC(0.1-2) | TAP(0.5-3) |
| 73 | Es3 | GEt(0.1-5)+CyE(0.1-5) | DBPC(0.1-2) | TAP(0.5-3) |
| 74 | Es3 | GEt(0.1-5)+Ole(0.1-5) | DBPC(0.1-2) | TAP(0.5-3) |
| 75 | Es3 | GEt(0.1-5)+CDI(0.02-0.5) | DBPC(0.1-2) | TAP(0.5-3) |

[Table 6]

| Composition example | Base oil | Acid scavenger | Phenol-based antioxidant | Phosphorus-containing antiwear agent |
|---|---|---|---|---|
| 76 | Es3 | GEs(0.1-5) | DBPC(0.1-2) | TAP(1-2) |
| 77 | Es3 | GEs(1-2) | DBPC(0.1-2) | TAP(1-2) |
| 78 | Es3 | GEt(0.1-5) | DBPC(0.1-2) | TAP(1-2) |
| 79 | Es3 | GEt(1-2) | DBPC(0.1-2) | TAP(1-2) |
| 80 | Es3 | GEs(0.1-5)+CDI(0.01-1) | DBPC(0.1-2) | TAP(1-2) |
| 81 | Es3 | GEs(1-2)+CDI(0.01-1) | DBPC(0.1-2) | TAP(1-2) |
| 82 | Es3 | GEt(0.1-5)+CDI(0.01-1) | DBPC(0.1-2) | TAP(1-2) |
| 83 | Es3 | GEt(1-2)+CDI(0.01-1) | DBPC(0.1-2) | TAP(1-2) |
| 84 | Es3 | GEs(0.1-5)+GEt(0.1-5) | DBPC(0.1-2) | TAP(1-2) |
| 85 | Es3 | GEs(0.1-5)+CyE(0.1-5) | DBPC(0.1-2) | TAP(1-2) |
| 86 | Es3 | GEs(0.1-5)+Ole(0.1-5) | DBPC(0.1-2) | TAP(1-2) |
| 87 | Es3 | GEs(0.1-5)+CDI(0.02-0.5) | DBPC(0.1-2) | TAP(1-2) |

(continued)

| Composition example | Base oil | Acid scavenger | Phenol-based antioxidant | Phosphorus-containing antiwear agent |
|---|---|---|---|---|
| 88 | Es3 | GEt(0.1-5)+CyE(0.1-5) | DBPC(0.1-2) | TAP(1-2) |
| 89 | Es3 | GEt(0.1-5)+Ole(0.1-5) | DBPC(0.1-2) | TAP(1-2) |
| 90 | Es3 | GEt(0.1-5)+CDI(0.02-0.5) | DBPC(0.1-2) | TAP(1-2) |

[Table 7]

| Composition example | Base oil | Acid scavenger | Phenol-based antioxidant | Phosphorus-containing antiwear agent |
|---|---|---|---|---|
| 91 | Es4 | GEs(0.1-5) | DBPC(0.1-2) | TAP(0.5-3) |
| 92 | Es4 | GEs(1-2) | DBPC(0.1-2) | TAP(0.5-3) |
| 93 | Es4 | GEt(0.1-5) | DBPC(0.1-2) | TAP(0.5-3) |
| 94 | Es4 | GEt(1-2) | DBPC(0.1-2) | TAP(0.5-3) |
| 95 | Es4 | GEs(0.1-5)+CDI(0.01-1) | DBPC(0.1-2) | TAP(0.5-3) |
| 96 | Es4 | GEs(1-2)+CDI(0.01-1) | DBPC(0.1-2) | TAP(0.5-3) |
| 97 | Es4 | GEt(0.1-5)+CDI(0.01-1) | DBPC(0.1-2) | TAP(0.5-3) |
| 98 | Es4 | GEt(1-2)+CDI(0.01-1) | DBPC(0.1-2) | TAP(0.5-3) |
| 99 | Es4 | GEs(0.1-5)+GEt(0.1-5) | DBPC(0.1-2) | TAP(0.5-3) |
| 100 | Es4 | GEs(0.1-5)+CyE(0.1-5) | DBPC(0.1-2) | TAP(0.5-3) |
| 101 | Es4 | GEs(0.1-5)+Ole(0.1-5) | DBPC(0.1-2) | TAP(0.5-3) |
| 102 | Es4 | GEs(0.1-5)+CDI(0.02-0.5) | DBPC(0.1-2) | TAP(0.5-3) |
| 103 | Es4 | GEt(0.1-5)+CyE(0.1-5) | DBPC(0.1-2) | TAP(0.5-3) |
| 104 | Es4 | GEt(0.1-5)+Ole(0.1-5) | DBPC(0.1-2) | TAP(0.5-3) |
| 105 | Es4 | GEt(0.1-5)+CDI(0.02-0.5) | DBPC(0.1-2) | TAP(0.5-3) |

[Table 8]

| Composition example | Base oil | Acid scavenger | Phenol-based antioxidant | Phosphorus-containing antiwear agent |
|---|---|---|---|---|
| 106 | Es4 | GEs(0.1-5) | DBPC(0.1-2) | TAP(1-2) |
| 107 | Es4 | GEs(1-2) | DBPC(0.1-2) | TAP(1-2) |
| 108 | Es4 | GEt(0.1-5) | DBPC(0.1-2) | TAP(1-2) |
| 109 | Es4 | GEt(1-2) | DBPC(0.1-2) | TAP(1-2) |
| 110 | Es4 | GEs(0.1-5)+CDI(0.01-1) | DBPC(0.1-2) | TAP(1-2) |
| 111 | Es4 | GEs(1-2)+CDI(0.01-1) | DBPC(0.1-2) | TAP(1-2) |
| 112 | Es4 | GEt(0.1-5)+CDI(0.01-1) | DBPC(0.1-2) | TAP(1-2) |
| 113 | Es4 | GEt(1-2)+CDI(0.01-1) | DBPC(0.1-2) | TAP(1-2) |
| 114 | Es4 | GEs(0.1-5)+GEt(0.1-5) | DBPC(0.1-2) | TAP(1-2) |
| 115 | Es4 | GEs(0.1-5)+CyE(0.1-5) | DBPC(0.1-2) | TAP(1-2) |
| 116 | Es4 | GEs(0.1-5)+Ole(0.1-5) | DBPC(0.1-2) | TAP(1-2) |
| 117 | Es4 | GEs(0.1-5)+CDI(0.02-0.5) | DBPC(0.1-2) | TAP(1-2) |
| 118 | Es4 | GEt(0.1-5)+CyE(0.1-5) | DBPC(0.1-2) | TAP(1-2) |

(continued)

| Composition example | Base oil | Acid scavenger | Phenol-based antioxidant | Phosphorus-containing antiwear agent |
|---|---|---|---|---|
| 119 | Es4 | GEt(0.1-5)+Ole(0.1-5) | DBPC(0.1-2) | TAP(1-2) |
| 120 | Es4 | GEt(0.1-5)+CDI(0.02-0.5) | DBPC(0.1-2) | TAP(1-2) |

[Table 9]

| Composition example | Base oil | Acid scavenger | Phenol-based antioxidant | Phosphorus-containing antiwear agent |
|---|---|---|---|---|
| 121 | Es5 | GEs(0.1-5) | DBPC(0.1-2) | TAP(0.5-3) |
| 122 | Es5 | GEs(1-2) | DBPC(0.1-2) | TAP(0.5-3) |
| 123 | Es5 | GE(0.1-5) | DBPC(0.1-2) | TAP(0.5-3) |
| 124 | Es5 | GEt(1-2) | DBPC(0.1-2) | TAP(0.5-3) |
| 125 | Es5 | GEs(0.1-5)+CDI(0.01-1) | DBPC(0.1-2) | TAP(0.5-3) |
| 126 | Es5 | GEs(1-2)+CDI(0.01-1) | DBPC(0.1-2) | TAP(0.5-3) |
| 127 | Es5 | GEt(0.1-5)+CDI(0.01-1) | DBPC(0.1-2) | TAP(0.5-3) |
| 128 | Es5 | GEt(1-2)+CDI(0.01-1) | DBPC(0.1-2) | TAP(0.5-3) |
| 129 | Es5 | GEs(0.1-5)+GEt(0.1-5) | DBPC(0.1-2) | TAP(0.5-3) |
| 130 | Es5 | GEs(0.1-5)+CyE(0.1-5) | DBPC(0.1-2) | TAP(0.5-3) |
| 131 | Es5 | GEs(0.1-5)+Ole(0.1-5) | DBPC(0.1-2) | TAP(0.5-3) |
| 132 | Es5 | GEs(0.1-5)+CDI(0.02-0.5) | DBPC(0.1-2) | TAP(0.5-3) |
| 133 | Es5 | GEt(0.1-5)+CyE(0.1-5) | DBPC(0.1-2) | TAP(0.5-3) |
| 134 | Es5 | GEt(0.1-5)+Ole(0.1-5) | DBPC(0.1-2) | TAP(0.5-3) |
| 135 | Es5 | GEt(0.1-5)+CDI(0.02-0.5) | DBPC(0.1-2) | TAP(0.5-3) |

[Table 10]

| Composition example | Base oil | Acid scavenger | Phenol-based antioxidant | Phosphorus-containing antiwear agent |
|---|---|---|---|---|
| 136 | Es5 | GEs(0.1-5) | DBPC(0.1-2) | TAP(1-2) |
| 137 | Es5 | GEs(1-2) | DBPC(0.1-2) | TAP(1-2) |
| 138 | Es5 | GEt(0.1-5) | DBPC(0.1-2) | TAP(1-2) |
| 139 | Es5 | GEt(1-2) | DBPC(0.1-2) | TAP(1-2) |
| 140 | Es5 | GEs(0.1-5)+CDI(0.01-1) | DBPC(0.1-2) | TAP(1-2) |
| 141 | Es5 | GEs(1-2)+CDI(0.01-1) | DBPC(0.1-2) | TAP(1-2) |
| 142 | Es5 | GEt(0.1-5)+CDI(0.01-1) | DBPC(0.1-2) | TAP(1-2) |
| 143 | Es5 | GEt(1-2)+CDI(0.01-1) | DBPC(0.1-2) | TAP(1-2) |
| 144 | Es5 | GEs(0.1-5)+GEt(0.1-5) | DBPC(0.1-2) | TAP(1-2) |
| 145 | Es5 | GEs(0.1-5)+CyE(0.1-5) | DBPC(0.1-2) | TAP(1-2) |
| 146 | Es5 | GEs(0.1-5)+Ole(0.1-5) | DBPC(0.1-2) | TAP(1-2) |
| 147 | Es5 | GEs(0.1-5)+CDI(0.02-0.5) | DBPC(0.1-2) | TAP(1-2) |
| 148 | Es5 | GEt(0.1-5)+CyE(0.1-5) | DBPC(0.1-2) | TAP(1-2) |
| 149 | Es5 | GEt(0.1-5)+Ole(0.1-5) | DBPC(0.1-2) | TAP(1-2) |

(continued)

| Composition example | Base oil | Acid scavenger | Phenol-based antioxidant | Phosphorus-containing antiwear agent |
|---|---|---|---|---|
| 150 | Es5 | GEt(0.1-5)+CDI(0.02-0.5) | DBPC(0.1-2) | TAP(1-2) |

The refrigerant is a mixed refrigerant containing HFO-1132(E) and HFO-1234yf (hereinafter simply referred to as "mixed refrigerant"). The HFO-1132(E) fraction in the mixed refrigerant (the proportion of HFO-1132(E) to the total amount of HFO-1132(E) and HFO-1234yf) is preferably 1% by mass or more, and preferably 90% by mass or less. From the viewpoint of lowering the boiling point and increasing the pressure of the mixed refrigerant to extract heat at lower temperatures, the HFO-1132(E) fraction is preferably 5% by mass or more, 10% by mass or more, or 15% by mass or more, and from the viewpoint of improving stability and combustion resistance, the HFO-1132(E) fraction is preferably 80% by mass or less, 60% by mass or less, 50% by mass or less, 40% by mass or less, 30% by mass or less, or 25% by mass or less.

When the HFO-1132(E) fraction is within the above range, the refrigerant dissolution viscosity of the working fluid composition under high temperature and high pressure conditions can be higher compared to using HFO-1234yf alone as the refrigerant, thereby improving the antiwear property of the refrigerant compressor. In other words, in another embodiment of the present invention, HFO-1132(E) is useful as a refrigerant dissolution viscosity improver in a working fluid composition containing HFO-1234yf and refrigerating machine oil. Furthermore, another embodiment of the present invention is a method for improving the refrigerant dissolution viscosity by mixing and using HFO-1132(E) as the refrigerant in a working fluid composition containing HFO-1234yf and refrigerating machine oil. In these embodiments, the antiwear property and reliability of the refrigerant compressor can be expected to improve. Additionally, by significantly improving the refrigerant dissolution viscosity, it is possible to advance the low-viscosity grade of conventional refrigerating machine oils used in refrigerating machines employing HFO-1234yf. This allows for further reduction of the viscosity of refrigerating machine oils in lower temperature regions.

The refrigerant may contain only HFO-1132(E) and HFO-1234yf, or may further contain an additional refrigerant in addition to HFO-1132(E) and HFO-1234yf. Examples of the additional refrigerant include a saturated hydrofluorocarbon (HFC) and an unsaturated hydrofluorocarbon (HFO) other than HFO-1132(E) and HFO-1234yf.

Examples of the saturated hydrofluorocarbon include difluoromethane (R32), trifluoromethane (R23), pentafluoroethane (R125), 1,1,2,2-tetrafluoroethane (R134), 1,1,1,2-tetrafluoroethane (R134a), 1,1,1-trifluoroethane (R143a), 1,1-difluoroethane (R152a), fluoroethane (R161), 1,1,1,2,3,3,3-heptafluoropropane (R227ea), 1,1,1,2,3,3-hexafluoropropane (R236ea), 1,1,1,3,3,3-hexafluoropropane (R236fa), 1,1,1,3,3-pentafluoropropane (R245fa), and 1,1,1,3,3-pentafluorobutane (R365mfc). The refrigerant may contain one or more types of these saturated hydrofluorocarbons.

In one embodiment, the refrigerant may contain HFO-1132(E), HFO-1234yf, and difluoromethane (R32), and may consist only of HFO-1132(E), HFO-1234yf, and difluoromethane (R32). In these cases, the content of HFO-1132(E) may be 10% by mass or more, 15% by mass or more, or 20% by mass or more, and preferably 45% by mass or less, 40% by mass or less, or 35% by mass or less, based on the total amount of the refrigerant. The content of HFO-1234yf may be 35% by mass or more, 40% by mass or more, or 45% by mass or more, and preferably 65% by mass or less, 60% by mass or less, or 55% by mass or less, based on the total amount of the refrigerant. The content of R32 may be 10% by mass or more, 15% by mass or more, or 20% by mass or more, and preferably 40% by mass or less, 35% by mass or less, or 30% by mass or less, based on the total amount of the refrigerant. Specific examples of such refrigerants include R479A (a refrigerant consisting of 28% by mass ($\pm$2% by mass) of HFO-1132(E), 50.5% by mass ($\pm$2% by mass) of HFO-1234yf, and 21.5% by mass ($\pm$2% by mass) of R32). The GWP (AR5) of such mixed refrigerants containing R32 is preferably 500 or lower, 300 or lower, 200 or lower, or 160 or lower, and may be 0 or higher, 10 or higher, or 50 or higher.

Examples of the unsaturated hydrofluorocarbon other than HFO-1132(E) and HFO-1234yf include 1,2,3,3,3-pentafluoropropene (HFO-1225ye), 1,3,3,3-tetrafluoropropene (HFO-1234ze), 1,2,3,3-tetrafluoropropene (HFO-1234ye), 3,3,3-trifluoropropene (HFO-1243zf), trifluoroethylene (HFO-1123), cis-1,2-difluoroethylene (HFO-1132(Z)), and 1,1-difluoroethylene (HFO-1132a).

The boiling point of the refrigerant is preferably -30°C or lower, more preferably -35°C or lower, or -40°C or lower, and may be -60°C or higher, -55°C or higher, or -50°C or higher. The boiling point of the refrigerant in this specification refers to the temperature at which the liquid phase of the refrigerant becomes atmospheric pressure (101.3 kPa).

The volume resistivity of the refrigerant is preferably $1\times10^{-6}$ T$\Omega\cdot$m or more, more preferably $1\times10^{-4}$ T$\Omega\cdot$m or more, $1\times10^{-3}$ T$\Omega\cdot$m or more, or $1\times10^{-2}$ T$\Omega\cdot$m or more.

The saturated vapor pressure at 80°C of the refrigerant is preferably 3 MPa or higher, more preferably 3.5 MPa or higher, or 3.7 MPa or higher, and may be 5 MPa or lower or 4 MPa or lower. The saturated vapor pressure of the refrigerant at 40°C is preferably 1.1 MPa or higher, more preferably 1.2 MPa or higher, or 1.3 MPa or higher, and may be 2.5 MPa or lower or 2 MPa or lower.

The refrigerant may be mildly flammable. Specifically, the refrigerant may be a refrigerant included in the A2 classification or A2L classification in the ASHRAE (The American Society of Heating, Refrigerating and Air-conditioning Engineers) 34 combustion classification.

By using a mixed refrigerant in which HFO-1132(E) is mixed with HFO-1234yf, the refrigerant can be useful as a heating heat pump that can extract heat even in lower temperature environments, such as - 20°C or lower, more preferably -30°C or lower, or -40°C or lower. This mixed refrigerant preferably contains HFO-1132(E) and HFO-1234yf as components of the mixed refrigerant to have a boiling point (below - 40°C) and a saturated pressure (a positive pressure at -40°C), as shown in Tables 11 and 12, and a GWP (AR4) of 5 to 7, a GWP (AR5) of 1 or lower, and a combustion classification of 2L. In the tables below, E.H indicates that the heating method in the low-temperature environment is an electric heater, and H.P indicates that the heat pump can be applied.

[Table 11]

| Refrigerant No. | 1 | 2 | 3 | 4 | 5 | 6 | 7 | 8 | 9 |
|---|---|---|---|---|---|---|---|---|---|
| HFO-1132(E) | 0 | 10 | 12.1 | 15 | 20 | 25 | 30 | 35 | 40 |
| HFO-1234yf | 100 | 90 | 87.9 | 85 | 80 | 75 | 70 | 65 | 60 |
| Boiling point (°C) | -29.5 | -38.8 | -40 | -41.4 | -43.3 | -44.7 | -45.9 | -46.9 | -47.7 |
| GWP(AR4) | 4 | 5 | 5 | 5 | 5 | 6 | 6 | 6 | 6 |
| GWP(AR5) | <1 | <1 | <1 | <1 | <1 | <1 | <1 | <1 | <1 |
| Saturated pressure (20°C) MPa | 0.59 | - | - | - | - | - | - | - | - |
| Saturated pressure (40°C) MPa | - | - | - | - | - | - | 1.592 | - | 1.745 |
| Saturated pressure (45°C) MPa | 1.154 | - | - | - | 1.607 | - | 1.795 | 1.883 | 1.966 |
| Saturated pressure (-10°C) MPa | 0.222 | - | - | 0.35 | - | - | 0.425 | - | 0.461 |
| Saturated pressure (-40°C) kPaG | -39 | -4.4 | 0.9 | 7.5 | 17.2 | 25.3 | 32.3 | 38.4 | 43.9 |
| ASHRAE combustion classification | 2L | 2L | 2L | 2L | 2L | 2L | 2L | 2L | 2L |
| Heating method | E.H | E.H | H.P | H.P | H.P | H.P | H.P | H.P | H.P |

[Table 12]

| Refrigerant No. | 10 | 11 | 12 | 13 | 14 | 15 | 16 | 17 | 18 | 19 |
|---|---|---|---|---|---|---|---|---|---|---|
| HFO-1132(E) | 45 | 50 | 53.5 | 55 | 60 | 65 | 70 | 72 | 75 | 23 |
| HFO-1234yf | 55 | 50 | 46.5 | 45 | 40 | 35 | 30 | 28 | 25 | 77 |
| Boiling point (°C) | -48.4 | -49.1 | - | -49.6 | -50.2 | -50.5 | - | -51.2 | -51.4 | -44.6 |
| GWP(AR4) | 7 | 7 | 7 | 7 | 8 | 8 | 8 | 8 | 9 | - |
| GWP(AR5) | <1 | <1 | <1 | <1 | <1 | <1 | <1 | <1 | <1 | <1 |
| Saturated pressure (20°C) MPa | - | - | - | - | - | - | - | - | - | 0.94 |
| Saturated pressure (40°C) MPa | 1.817 | - | 1.95 | 1.95 | 2.012 | - | 2.128 | - | - | - |
| Saturated pressure (45°C) MPa | - | 2.123 | - | - | - | - | - | - | - | |
| Saturated pressure (-10°C) MPa | - | 0.492 | - | - | - | - | - | - | - | - |
| Saturated pressure (-40°C) kPaG | 48.8 | 53.4 | - | 57.5 | 61.4 | 65 | - | 69.6 | 71.5 | - |
| ASHRAE combustion classification | 2L | 2L | 2L | 2 | 2 | 2 | 2 | 2 | 2 | 2L |
| Heating method | H.P | H.P | H.P | H.P | H.P | H.P | H.P | H.P | H.P | H.P |

The proportion of HFO-1132(E) in the total amount of HFO-1132(E) and HFO-1234yf in such mixed refrigerants is preferably 12.1% by mass or more, more preferably 15% by mass or more, 20% by mass or more, or 25% by mass or more, and preferably 53.5% by mass or less, more preferably 50% by mass or less, or 45% by mass or less. Such mixed refrigerants include both mixed refrigerants with an HFO-1132(E) proportion of 25% by mass or less or less than 25% by mass, such as R-474A (a mixed refrigerant consisting of 23% by mass (±2% by mass) of HFO-1132(E) and 77% by mass

(±2% by mass) of HFO-1234yf), and mixed refrigerants with an HFO-1132(E) proportion of 25% by mass or more. In particular, by setting the proportion of HFO-1132(E) in the total amount of HFO-1132(E) and HFO-1234yf to 25% by mass or more, more than 25% by mass, 30% by mass or more, 32.5% by mass or more, or 35% by mass or more, the boiling point of the mixed refrigerant can be lowered, allowing heat extraction at lower temperatures, and the refrigerant fraction (refrigerant solubility) in the working fluid composition can be reduced, maintaining a high viscosity (refrigerant dissolution viscosity (unit: $mm^2/s$)) of the working fluid composition, thereby improving the reliability of the sliding parts of the refrigerant compressor. Furthermore, by setting the proportion of HFO-1132(E) in the total amount of HFO-1132(E) and HFO-1234yf to 50% by mass or less, 40% by mass or less, 30% by mass or less, less than 30% by mass, 25% by mass or less, or less than 25% by mass, a more stable working fluid composition can be obtained.

The content of the refrigerating machine oil in the working fluid composition may be, for example, 1 part by mass or more or 2 parts by mass or more, and may be 500 parts by mass or less or 400 parts by mass or less, with respect to 100 parts by mass of the refrigerant.

The refrigerant fraction (refrigerant solubility) of the working fluid composition at 80°C and 2.5 MPa (the proportion of the refrigerant to the total amount of the refrigerating machine oil and refrigerant; also referred to as the refrigerant dissolution amount in the working fluid composition; the same applies hereinafter) is 80% by mass or less, and may be preferably 60% by mass or less, 40% by mass or less, 35% by mass or less, or 30% by mass or less, and may be 10% by mass or more or 20% by mass or more.

The refrigerant dissolution viscosity of the working fluid composition at 80°C and 2.5 MPa can be higher compared to using HFO-1234yf alone as the refrigerant, and may be 1 $mm^2/s$ or more preferably 1.5 $mm^2/s$ or higher, 2 $mm^2/s$ or higher, or 2.5 $mm^2/s$ or higher, and may be 4 $mm^2/s$ or lower.

The refrigerant fraction of the working fluid composition at 80°C and 2 MPa may be 30% by mass or less, preferably 28% by mass or less, 25% by mass or less, 23% by mass or less, or 20% by mass or less, and may be 5% by mass or more or 15% by mass or more.

The refrigerant dissolution viscosity of the working fluid composition at 80°C and 2 MPa may be 2.2 $mm^2/s$ or more preferably 2.5 $mm^2/s$ or higher, 3 $mm^2/s$ or higher, 3.5 $mm^2/s$ or higher, or 3.7 $mm^2/s$ or higher, and may be 5 $mm^2/s$ or lower.

The refrigerant fraction of the working fluid composition at 80°C and 1.5 MPa may be 20% by mass or less, preferably 18% by mass or less, 16% by mass or less, or 15% by mass or less, and may be 5% by mass or more, 8% by mass or more, or 10% by mass or more.

The refrigerant dissolution viscosity of the working fluid composition at 80°C and 1.5 MPa may be 3.5 $mm^2/s$ or more preferably 4 $mm^2/s$ or higher, 4.5 $mm^2/s$ or higher, or 5 $mm^2/s$ or higher, and may be 10 $mm^2/s$ or lower, 8 $mm^2/s$ or lower, or 6 $mm^2/s$ or lower.

This working fluid composition is excellent in having a high refrigerant dissolution viscosity. For example, the refrigerant dissolution viscosity of this working fluid composition is higher compared to using a refrigerant containing only HFO-1234yf. The refrigerant dissolution viscosity of the working fluid composition at 80°C and 2 MPa may be 1.1 times or more, 1.2 times or more, 1.5 times or more, or 1.8 times or more, and may be 3 times or less or 2.5 times or less compared to the refrigerant dissolution viscosity of the working fluid composition under the same conditions using a refrigerant containing only HFO-1234yf.

The refrigerant dissolution viscosity of the working fluid composition at 80°C and a refrigerant fraction of 20% by mass may be 5 $mm^2/s$ or lower or 4 $mm^2/s$ or lower, preferably 3 $mm^2/s$ or higher or 3.3 $_m m^2/s$ or higher.

The two-layer separation temperature of the working fluid composition at an oil fraction of 1 to 99% by mass, particularly 10 to 30% by mass, may be -30°C or lower, preferably -40°C or lower, -50°C or lower, or -60°C or lower.

The volume resistivity of the working fluid composition may be $1 \times 10^{-6}$ TΩ·m or more preferably $1 \times 10^{-4}$ TΩ·m or higher, $1 \times 10^{-3}$ TΩ·m or higher, or $1 \times 10^{-2}$ TΩ·m or higher. By using highly refined polyvinyl ether or polyol ester, particularly polyol ester, as the refrigerating machine oil, a working fluid composition with higher volume resistivity can be obtained.

The working fluid composition described above is filled in the refrigerant circulation system of the refrigerating machine. In other words, another embodiment of the present invention is a refrigerating machine containing a refrigerant circulation system, wherein the refrigerant circulation system is filled with the above-described working fluid composition.

Fig. 1 is a schematic diagram showing one embodiment of a refrigerating machine. As shown in Fig. 1, the refrigerating machine 10 includes a refrigerant circulation system 6 in which a compressor (refrigerant compressor) 1, a condenser (gas cooler) 2, an expansion mechanism 3 (capillary, expansion valve, etc.), and an evaporator (heat exchanger) 4 are sequentially connected by a flow path 5. In one embodiment, the refrigerant circulation system 6 further includes an accumulator 7 between the evaporator 4 and the compressor 1 (on the side of the compressor 1) to suppress and prevent liquid refrigerant from directly flowing into the compressor 1.

In the refrigerant circulation system 6, the high-temperature (usually 70 to 120°C) refrigerant discharged from the compressor 1 into the flow path 5 first becomes a high-density fluid (supercritical fluid, etc.) in the condenser 2. Subsequently, the refrigerant liquefies by passing through the narrow flow path of the expansion mechanism 3 and then vaporizes in the evaporator 4, becoming low-temperature (usually -40 to 0°C). The cooling by the refrigerating machine 10

utilizes the phenomenon where the refrigerant absorbs heat from the surroundings when vaporizing in the evaporator 4.

Inside the compressor 1, a small amount of refrigerant and a large amount of refrigerating machine oil coexist under high-temperature (usually 70 to 120°C) conditions. The refrigerant discharged from the compressor 1 into the flow path 5 is gaseous and contains a small amount (usually 1 to 10% by volume) of refrigerating machine oil as mist, with a small amount of refrigerant dissolved in this mist-like refrigerating machine oil (point a in Fig. 1).

In the condenser 2, the gaseous refrigerant is compressed to become a high-density fluid, and a large amount of refrigerant and a small amount of refrigerating machine oil coexist under relatively high-temperature (usually 40 to 80°C) conditions (point b in Fig. 1). Furthermore, the mixture of a large amount of refrigerant and a small amount of refrigerating machine oil is sequentially sent to the expansion mechanism 3 and the evaporator 4, rapidly becoming low-temperature (usually -40 to 0°C) (points c and d in Fig. 1), and then returned to the compressor 1.

When the compressor 1 is under high pressure, there is a possibility that liquid refrigerant may directly flow into the compressor 1. To suppress and prevent this, as mentioned above, the accumulator 7 is placed between the evaporator 4 and the compressor 1 (on the side of the compressor 1). In the resting state, a large amount of liquid refrigerant may be present inside the compressor 1, and during startup, the viscosity of the refrigerating machine oil may rapidly decrease, leading to insufficient lubrication, and it is necessary to maintain an appropriate viscosity even when the liquid refrigerant is dissolved. Therefore, it is necessary to maintain appropriate viscosity even when liquid refrigerant is dissolved.

Examples of such refrigerating machines 10 include refrigerating devices and air conditioning devices. Examples of the refrigerating devices include refrigerators, refrigerated warehouses, vending machines, cooling devices in chemical plants, etc. Examples of the air conditioning devices include automotive air conditioners, residential air conditioners, package air conditioners, dehumidifiers, etc. When the refrigerating machine 10 is an air conditioner for electric vehicles, hybrid vehicles, etc., particularly for electric vehicles that cannot utilize engine waste heat, using the above-described working fluid composition allows heat extraction as a heat pump even in extremely low-temperature environments such as -20°C or lower, -30°C or lower, or -40°C or lower without using an electric heater, thereby suppressing battery consumption and extending the driving range of electric vehicles.

## Examples

Hereinafter, the present invention will be described more specifically based on examples, but the present invention is not limited to these examples.

(Refrigerating machine oil 1)

A refrigerating machine oil 1 was prepared by blending a base oil 1 (polyol ester (ester of pentaerythritol and dipentaerythritol with 2-ethylhexanoic acid and 3,5,5-trimethylhexanoic acid), 40°C kinematic viscosity: 90.2 $mm^2/s$, 100°C kinematic viscosity: 9.7 $mm^2/s$), glycidyl ester-based acid scavenger (glycidyl neodecanoate), phenol-based antioxidant (2,6-di-tert-butyl-p-cresol), and phosphorus-containing antiwear agent (tricresyl phosphate) in a total amount of 2.3% by mass based on the total amount of the refrigerating machine oil such that the P/E ratio was 0.62.

(Refrigerating machine oil 2)

A refrigerating machine oil 2 (P/E ratio = 0.41) was prepared by changing the blending amount of the glycidyl ester-based acid scavenger (glycidyl neodecanoate) in the above refrigerating machine oil 1 to 1.5 times.

(Refrigerating machine oil 3)

A refrigerating machine oil 3 (P/E ratio = 0.31) was prepared by changing the blending amount of the glycidyl ester-based acid scavenger (glycidyl neodecanoate) in the above refrigerating machine oil 1 to 2 times.

(Refrigerating machine oil 4)

A refrigerating machine oil 4 (P/E ratio = 0.31) was prepared by changing the base oil 1 in the refrigerating machine oil 3 to a base oil 2 (polyvinyl ether (a copolymer of ethyl vinyl ether and isobutyl vinyl ether, ethyl vinyl ether/isobutyl vinyl ether = 83/17 (molar ratio)), 40°C kinematic viscosity: 33.7 $mm^2/s$, 100°C kinematic viscosity: 5.3 $mm^2/s$), and changing the type of the acid scavenger to glycidyl ether-based acid scavenger (2-ethylhexyl glycidyl ether), while the blending amounts of the acid scavenger, antioxidant, and phosphorus-containing antiwear agent were the same as those in the refrigerating machine oil 3.

(Refrigerating machine oil 5)

A refrigerating machine oil 5 was prepared by blending a base oil 3 (polyalkylene glycol (polypropylene glycol dimethyl ether), 40°C kinematic viscosity: 40.1 $mm^2/s$, 100°C kinematic viscosity: 9.3 $mm^2/s$), epoxy-based acid scavenger ($\alpha$-olefin oxide), phenol-based antioxidant (2,6-di-tert-butyl-p-cresol), and phosphorus-containing antiwear agent (tricresyl phosphate) in a total amount of 5.4% by mass such that the P/E ratio was 0.12.

(Refrigerating machine oils 6 to 8)

Refrigerating machine oils 6 to 8 were prepared in the same manner as the refrigerating machine oils 1 to 3, respectively, except that the base oil 1 in each of the refrigerating machine oils 1 to 3 was replaced with a base oil 4 (polyol ester (ester of pentaerythritol with 2-ethylhexanoic acid and 3,5,5-trimethylhexanoic acid), 40°C kinematic viscosity: 68.5 $mm^2/s$, 100°C kinematic viscosity: 8.3 $mm^2/s$).

(Mixed refrigerant)

Mixed refrigerants 1 and 2 described below were prepared as refrigerants that can be classified as A2L refrigerants according to ASHRAE combustion classification, which are refrigerants obtained by mixing HFO-1234yf (boiling point: -29.5°C, GWP (AR5): <1) with trans-1,2-difluoroethylene (HFO-1132(E)) (boiling point: -52.5°C, GWP (AR5): <1) (the data of such mixed refrigerant are shown in Tables 11 and 12).

Mixed Refrigerant 1: mixed refrigerant consisting of 35% by mass of HFO-1132(E) and 65% by mass of HFO-1234yf.
Mixed Refrigerant 2: mixed refrigerant consisting of 23% by mass of HFO-1132(E) and 77% by mass of HFO-1234yf

The relationship between the HFO-1132(E) fraction in the mixed refrigerant of HFO-1132(E) and HFO-1234yf and the boiling point of the mixed refrigerant is shown in Fig. 2.
Additionally, the following mixed refrigerant 3 was prepared by further mixing difluoromethane (R32) with HFO-1132(E) and HFO-1234yf.
Mixed Refrigerant 3: mixed refrigerant consisting of 28% by mass of HFO-1132(E), 50.5% by mass of HFO-1234yf, and 21.5% by mass of R32 (the proportion of HFO-1132(E) in the total amount of HFO-1132(E) and HFO-1234yf: 35.7% by mass)
Furthermore, the following mixed refrigerant 4 was prepared by mixing mixed refrigerant 1 and mixed refrigerant 2 in a ratio of approximately 7:3.
Mixed Refrigerant 4: A mixed refrigerant consisting of 31.5% by mass of HFO-1132(E) and 68.5% by mass of HFO-1234yf

[Evaluation of pressure-temperature-solubility characteristics and refrigerant dissolution viscosity]

The pressure-temperature-solubility characteristics and refrigerant dissolution viscosity of the working fluid compositions consisting of mixed refrigerants 1 to 3 or HFO-1234yf alone and refrigerating machine oil 1 were evaluated as follows.
First, 400 ml of refrigerating machine oil 1 was placed in a pressure-resistant container with a vibrating viscometer, and the container was vacuum degassed. Then, mixed refrigerant 1 or 2 was added to prepare the working fluid composition. Subsequently, the temperature and pressure inside the pressure-resistant container were varied within the range of temperature: 30 to 80°C and absolute pressure: 0.5 to about 4 MPa, and the volume and absolute viscosity of the working fluid composition were measured at each temperature and pressure. Using the obtained measurement values, refrigerant gas density, the amount of refrigerating machine oil and refrigerant filled, and the mass of the working fluid composition, the refrigerant fraction (refrigerant dissolution amount) (% by mass) and kinematic viscosity (refrigerant dissolution viscosity) ($mm^2/s$) of the working fluid composition were calculated. From the obtained results, refrigerant fraction (refrigerant dissolution amount)-pressure diagrams at 10°C intervals from 30 to 80°C and temperature-viscosity (refrigerant dissolution viscosity) diagrams at 10% by mass intervals from 0 to 40% by mass refrigerant fraction were created.
The main temperature and pressure refrigerant fraction and refrigerant dissolution viscosity values were extracted from the above evaluation results and shown in Table 13. Compared to Comparative Example 1-1 using HFO-1234yf alone as the refrigerant, the refrigerant fraction (refrigerant dissolution amount) was smaller and the refrigerant dissolution viscosity was higher under the same temperature and pressure conditions in Examples 1-1 to 1-3 using mixed refrigerants 1 to 3, respectively. In particular, in Comparative Example 1-1, the refrigerant fraction (refrigerant dissolution amount) rapidly increased and the refrigerant dissolution viscosity tended to fall below 1 $mm^2/s$ when the pressure exceeded 2.2 MPa at 80°C. However, by mixing HFO-1132(E) and adjusting the refrigerant fraction at

80°C and 2.5 MPa to 80% by mass or less, the refrigerant dissolution viscosity could be maintained at 1 $mm^2/s$ or higher, suggesting improved reliability under high-temperature and high-pressure conditions. This was confirmed not only in the mixed refrigerant 2 with an HFO-1132(E) mixing ratio of less than 25% by mass but also in the mixed refrigerant 1 with an HFO-1132(E) mixing ratio of 25% by mass or more and the mixed refrigerant 3 further mixed with R32.

[Table 13]

| Refrigerating machine oil 1 | Temperature (°C) | 80 | | | | |
|---|---|---|---|---|---|---|
| | Pressure (MPa) | 1.5 | 2.0 | 2.2 | 2.3 | 2.5 |
| Example 1 (Mixed refregerant 1) | Refrigerant fraction (% by mass) | 14 | 20 | 21 | 23.5 | 26 |
| | Refrigerant dissolution viscosity ($mm^2/s$) | 5.8 | 3.8 | 3.2 | 3.0 | 2.8 |
| Example 2 (Mixed refregerant 2) | Refrigerant fraction (% by mass) | 14 | 21 | 24 | 27 | 30 |
| | Refrigerant dissolution viscosity ($mm^2/s$) | 5.5 | 3.6 | 3.1 | 2.75 | 2.3 |
| Example 3 (Mixed refregerant 3) | Refrigerant fraction (% by mass) | 12 | 15 | 17 | 18 | 19 |
| | Refrigerant dissolution viscosity ($mm^2/s$) | 6.8 | 4.5 | 3.9 | 3.6 | 3.2 |
| Comparative Example 1 (HFO-1234yf alone) | Refrigerant fraction (% by mass) | 22 | 32 | 40 | 47 | 95 |
| | Refrigerant dissolution viscosity ($mm^2/s$) | 3.6 | 2.0 | 1.4 | <1.0 | <1.0 |

Aditionally, the refrigerant dissolution viscosity at 80 °C and refrigerant fractions of 10 to 40% by mass was ectracted from the above evaluation results and shown in Table 14. In Example 1-1 using the mixed refrigerant 1, the refrigerant dissolution viscosity was maintained at the same level as Comparative Example 1-1 using HFO-1234yf alone under the same refrigerant fraction. Similarly, when comparing the refrigerant dissolution viscosity at 0°C, the refrigerant dissolution viscosity tended to be lower when using the mixed refrigerant 1 compared to using HFO-1234yf alone under the same refrigerant fraction, indicating superior low-temperature fluidity.

[Table 14]

| Refrigerating machine oil 1 | Temperature (°C) | 80 | | | |
|---|---|---|---|---|---|
| | Refrigerant fraction (% by mass) | 10 | 20 | 30 | 40 |
| Example 1 (Mixed refregerant 1) | Pressure (MPa) | 1.1 | 2.0 | 2.8 | 3.3 |
| | Refrigerant dissolution viscosity ($mm^2/s$) | 8.0 | 3.8 | 2.1 | 1.2 |
| Example 2 (Mixed refregerant 2) | Pressure (MPa) | 1.2 | 1.9 | 2.5 | 2.9 |
| | Refrigerant dissolution viscosity ($mm^2/s$) | 7.2 | 3.8 | 2.3 | 1.5 |
| Example 3 (Mixed refregerant 3) | Pressure (MPa) | 1.3 | 2.6 | 3.5 | 4.2 |
| | Refrigerant dissolution viscosity ($mm^2/s$) | 6.9 | 3.1 | 1.6 | 0.9 |
| Comparative Example 1 (HFO-1234yf alone) | Pressure (MPa) | 0.7 | 1.4 | 1.9 | 2.2 |
| | Refrigerant dissolution viscosity ($mm^2/s$) | 7.5 | 4.1 | 2.3 | 1.3 |

The working fluid composition using the refrigerating machine oil 2 and refrigerating machine oil 3 exhibited refrigerant fractions and refrigerant dissolution viscosities at each temperature and pressure equivalent to those obtained when using the refrigerating machine oil 1. In the case of the working fluid composition using the refrigerating machine oil 4, the refrigerant fraction at 80°C and 2.5 MPa was 60% by mass or less, and the refrigerant fraction (refrigerant solubility) can be smaller and the refrigerant dissolution viscosity can be higher compared to the case where HFO-1234yf alone is used as the refrigerant, under the same temperature and pressure conditions.

Furthermore, for the working fluid composition (Example 1-4) in which the refrigerating machine oil 6 was used instead of the refrigerating machine oil 1 in Example 1-2, and for the working fluid composition (Comparative Example 1-2) in which the refrigerating machine oil 6 was used instead of the refrigerating machine oil 1 in Comparative Example 1-1, the pressure-temperature-solubility characteristics and refrigerant dissolution viscosity were evaluated in the same manner as described above. The results are shown in Table 15. For the fluid compositions using the refrigerating machine oils 7 and 8, the values can be equivalent to those of Example 1-4.

[Table 15]

| Refrigerating machine oil 6 | Temperature (°C) | 80 | | | | | |
|---|---|---|---|---|---|---|---|
| | Pressure (MPa) | 1.0 | 1.5 | 1.9 | 2.0 | 2.5 | 2.9 |
| Example 1-4 (Mixed refrigerant 2) | Refrigerant fraction (% by mass) | 10 | 15 | 20 | 22 | 30 | 40 |
| | Refrigerant dissolution viscosity ($mm^2/s$) | 6.0 | 4.5 | 3.3 | 3.0 | 2.0 | 1.3 |
| Comparative Example 1-2 (HFO-1234yf alone) | Refrigerant fraction (% by mass) | 14.5 | 22 | 28 | 30.5 | 66 | * |
| | Refrigerant dissolution viscosity ($mm^2/s$) | 5.1 | 3.2 | 2.3 | 2.0 | 0.4 | * |
| *No measurement values due to exceeding saturated vapor pressure. | | | | | | | |

In the working fluid composition (Example 1-5) using the mixed refrigerant 4 instead of the mixed refrigerant 1 in Example 1-1, the pressure-temperature-solubility characteristics and the value of the refrigerant dissolution viscosity can exhibit characteristics and values intermediate between those of the fluid compositions of Examples 1-1 and 1-2.

When the relationship between pressure (MPa) and refrigerant dissolution viscosity ($mm^2/s$) in the results of Tables 13 to 15 is plotted, it can be confirmed that, in Examples 1-1 to 1-4 using mixed refrigerants 1 to 3, the refrigerant dissolution viscosity with respect to pressure tends to be higher than in Comparative Example 1-1 or Comparative Example 1-2 using HFO-1234yf alone (not shown in the drawing).

[Stability evaluation 1]

Stability evaluation 1 was conducted in accordance with JIS K2211-09 (autoclave test). Specifically, 30 g of a sample (in which the water content in each of the refrigerating machine oil 1 and refrigerating machine oil 5 was adjusted to less than 10 ppm by mass) was weighed into an autoclave, and a catalyst (wires of iron, copper, and aluminum, each having an outer diameter of 1.6 mm × length of 50 mm) and 30 g of any one of the mixed refrigerants 1 to 3 were sealed therein, followed by heating at 175°C for 336 hours. The acid value (JIS C2101) of the sample after heating was measured. In addition, after extracting polar compounds in the sample after heating into water, the amount of the fluoride ion in the water was measured by ion chromatography in accordance with JIS K0102. The results are shown in Table 16.

[Table 16]

| | | | Example 2-1 | Comparative Example 2-1 |
|---|---|---|---|---|
| Refrigerating machine oil No. | | | 1 | 5 |
| Stability evaluation 1 | Mixed refrigerant 1 | Acid value (mgKOH/g) | 0.01 | 2.3 |
| | | Amount of fluoride ion (ppm) | <2 | 100 |
| | Mixed refrigerant 2 | Acid value (mgKOH/g) | <0.01 | 2.2 |
| | | Amount of fluoride ion (ppm) | <2 | 90 |
| | Mixed refrigerant 3 | Acid value (mgKOH/g) | 0.03 | - |
| | | Amount of fluoride ion (ppm) | <2 | - |

[Stability evaluation 2]

Except that the samples in which the water content in each of the refrigerating machine oils 1 to 3 and 5 was adjusted to 1000 ppm by mass were used, the acid value and the amount of the fluoride ion in the samples after heating were measured in the same manner as in the stability evaluation 1. The results are shown in Table 17.

[Table 17]

| | | | Example 3-1 | Example 3-2 | Example 3-3 | Comparative Example 3-1 |
|---|---|---|---|---|---|---|
| Refrigerating machine oil No. | | | 1 | 2 | 3 | 5 |
| Stability evaluation 2 | Mixed refrigerant 1 | Acid value (mgKOH/g) | 0.22 | 0.01 | <0.01 | 1.9 |
| | | Amount of fluoride ion (ppm) | 2 | <2 | <2 | 76 |
| | Mixed refrigerant 2 | Acid value (mgKOH/g) | 0.02 | <0.01 | <0.01 | 2.3 |
| | | Amount of fluoride ion (ppm) | <2 | <2 | <2 | 98 |
| | Mixed refrigerant 3 | Acid value (mgKOH/g) | - | - | 0.01 | - |
| | | Amount of fluoride ion (ppm) | - | - | <2 | - |

[Stability evaluation 3]

Except that the samples in which the water content in each of refrigerating machine oils 1, 3, 4, and 5 was adjusted to 500 ppm by mass were used, and the amount of air in each of the mixed refrigerants 1 to 3 was adjusted to 1000 ppm by mass, the acid value and the amount of the fluoride ion in the sample after heating were measured in the same manner as in the stability evaluation 1. The results are shown in Table 18.

[Table 18]

| | | | Example 4-1 | Example 4-2 | Example 4-3 | Comparative Example 4-1 |
|---|---|---|---|---|---|---|
| Refrigerating machine oil No. | | | 1 | 3 | 4 | 5 |
| Stability evaluation 3 | Mixed refrigerant 1 | Acid value (mgKOH/g) | 0.92 | 0.04 | 0.64 | 3.8 |
| | | Amount of fluoride ion (ppm) | 24 | 15 | 40 | 380 |
| | Mixed refrigerant 2 | Acid value (mgKOH/g) | 0.8 | 0.05 | - | - |
| | | Amount of fluoride ion (ppm) | 23 | 6 | - | - |
| | Mixed refrigerant 3 | Acid value (mgKOH/g) | 0.44 | 0.2 | - | - |
| | | Amount of fluoride ion (ppm) | 13 | 13 | - | - |

[Evaluation of two-layer separation temperature]

The two-layer separation temperature was evaluated according to JIS K2211:2009 "Refrigerating Machine Oil" "Refrigerant Compatibility Test Method" as follows.

Any of the refrigerating machine oils 1 to 8 were placed in a pressure-resistant glass container, vacuum degassed, and then sealed with one of the mixed refrigerants 1 to 4 to prepare a working fluid composition with an oil fraction of 1 to 99% by mass (typically 10 to 30% by mass where the critical dissolution temperature is obtained). The working fluid composition was gradually cooled from 20°C, and the temperature at which the working fluid composition separated into two layers or became cloudy was evaluated as the two-layer separation temperature. As a result, the two-layer separation temperature of the working fluid composition at an oil fraction of 10 to 30% by mass was - 60°C or lower in any combination of the refrigerating machine oils 1 to 4 and 6 to 8 and the mixed refrigerants 1 to 3. When using the refrigerating machine oil 5 and the mixed refrigerant 2, the two-layer separation temperature of the working fluid composition at an oil fraction of 10 to 30% by mass was -46 to -42°C.

## Reference Signs List

1: compressor, 2: condenser, 3: expansion mechanism, 4: evaporator, 5: flow path, 6: refrigerant circulation system, 7: accumulator, 10: refrigerating machine.

## Claims

**1.** A working fluid composition comprising:

a refrigerating machine oil; and
a refrigerant comprising trans-1,2-difluoroethylene (HFO-1132(E)) and 2,3,3,3-tetrafluoropropene (HFO-1234yf),
wherein the working fluid composition has a refrigerant fraction at 80°C and 2.5 MPa of 80% by mass or less,
wherein the refrigerating machine oil comprises:

at least one base oil selected from the group consisting of a polyol ester and a polyvinyl ether;
at least one epoxy-based acid scavenger selected from the group consisting of a glycidyl ester-based acid scavenger and a glycidyl ether-based acid scavenger;
a phenol-based antioxidant; and
a phosphorus-containing antiwear agent, and
wherein a P/E ratio represented by the following formula (A) is 0.2 or more and 1.1 or less:

$$\text{P/E ratio} = (W_P \times N_P / M_P) / (W_E \times N_E / M_E) \quad \cdots (A)$$

wherein $W_P$ represents a content (% by mass) of the phosphorus-containing antiwear agent based on a total amount of the refrigerating machine oil,
$N_P$ represents a number of a phosphorus atom in one molecule of the phosphorus-containing antiwear agent,
$M_P$ represents a molecular weight of the phosphorus-containing antiwear agent,
$W_E$ represents a content (% by mass) of the epoxy-based acid scavenger based on the total amount of the refrigerating machine oil,
$N_E$ represents a number of an epoxy-based group in one molecule of the epoxy-based acid scavenger, and
$M_E$ represents a molecular weight of the epoxy-based acid scavenger.

**2.** The working fluid composition according to claim 1, wherein the working fluid composition has a refrigerant dissolution viscosity at 80°C and 2.5 MPa of 1 $mm^2/s$ or higher.

**3.** The working fluid composition according to claim 1, wherein the working fluid composition has a two-layer separation temperature at an oil fraction of 10 to 30% by mass of -30°C or lower.

**4.** The working fluid composition according to claim 1, wherein the base oil comprises the polyol ester, and the polyol ester comprises an ester of a polyhydric alcohol and a fatty acid.

**5.** The working fluid composition according to claim 1, wherein the P/E ratio is 0.2 or more and 0.65 or less.

**6.** A refrigerating machine comprising a refrigerant circulation system comprising a compressor, a condenser, an expansion mechanism, and an evaporator,
wherein the refrigerant circulation system is filled with the working fluid composition according to any one of claims 1 to 5.

*Fig.1*

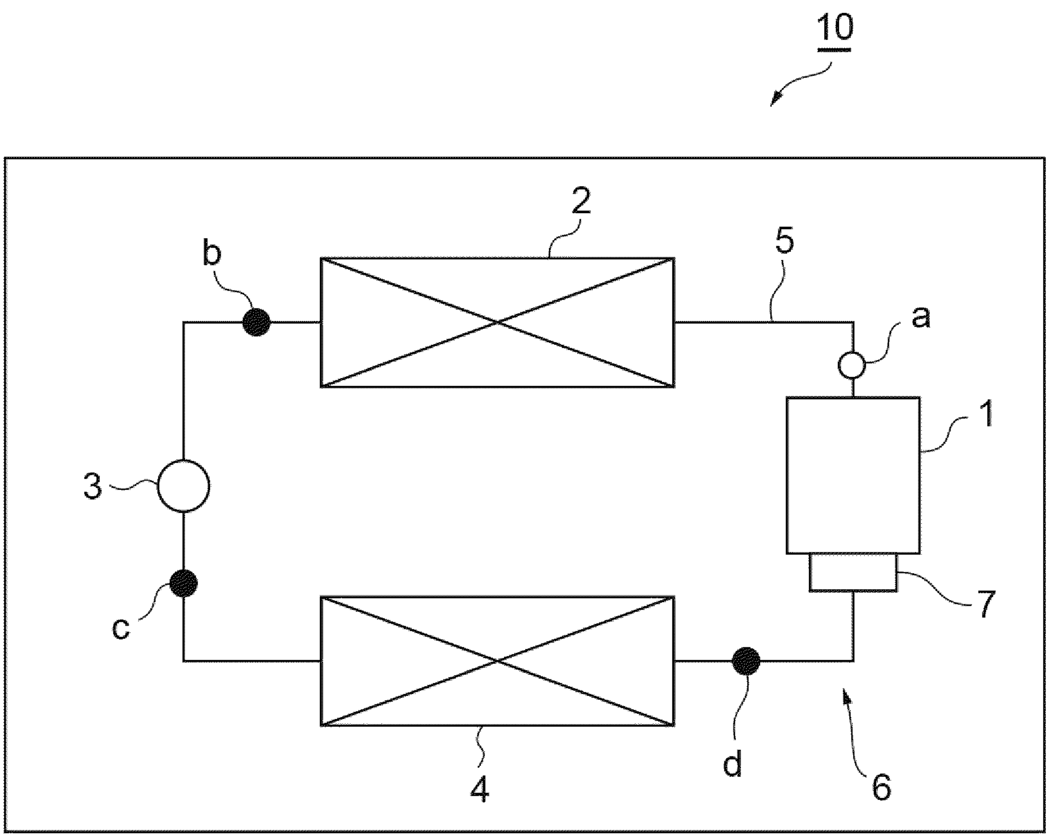

*Fig.2*

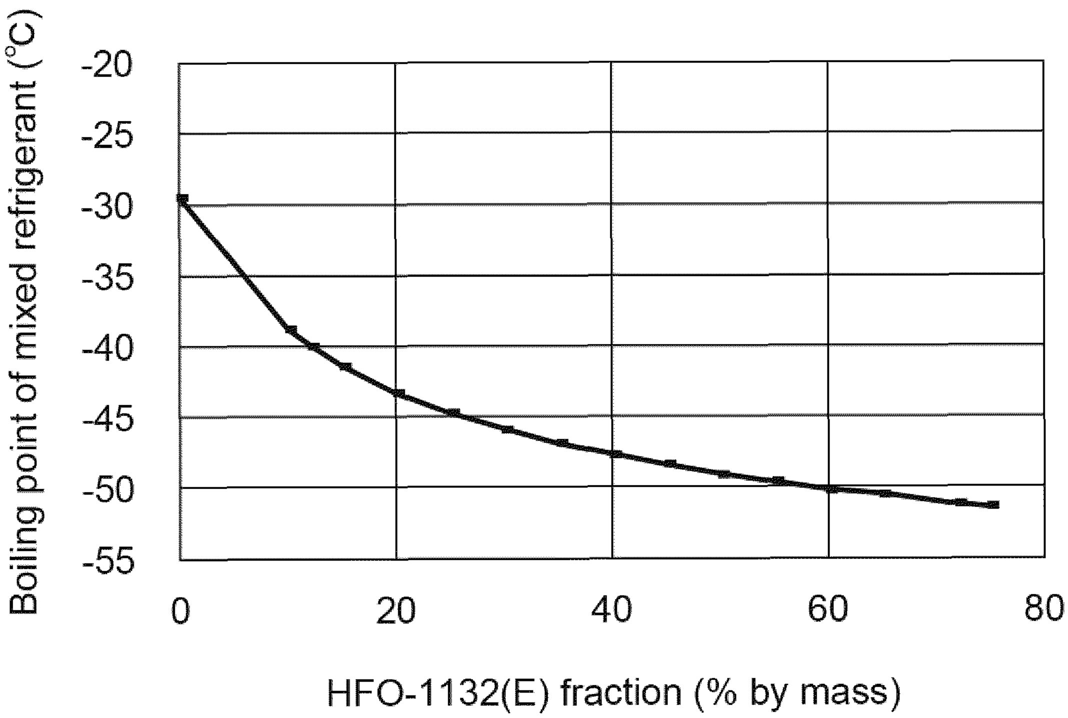
Boiling point of mixed refrigerant (°C)
-20
-25
-30
-35
-40
-45
-50
-55
0
20
40
60
80
HFO-1132(E) fraction (% by mass)

**INTERNATIONAL SEARCH REPORT**

International application No. **PCT/JP2023/041336**

**A. CLASSIFICATION OF SUBJECT MATTER**

***C10M 107/24***(2006.01)i; ***C09K 5/04***(2006.01)i; ***C10M 105/38***(2006.01)i; *C10N 30/00*(2006.01)n; *C10N 40/30*(2006.01)n
FI: C10M107/24; C10M105/38; C09K5/04 F; C10N30:00 Z; C10N40:30

According to International Patent Classification (IPC) or to both national classification and IPC

**B. FIELDS SEARCHED**

Minimum documentation searched (classification system followed by classification symbols)

C10M107/24; C09K5/04; C10M105/38; C10N30/00; C10N40/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2015/186670 A1 (ASAHI GLASS COMPANY, LIMITED) 10 December 2015 (2015-12-10)<br>claims, examples, etc. | 1-6 |
| A | WO 2015/186671 A1 (ASAHI GLASS COMPANY, LIMITED) 10 December 2015 (2015-12-10)<br>claims, examples, etc. | 1-6 |
| A | JP 2022-89538 A (HITACHI JOHNSON CONTROLS AIR CONDITIONING INC) 16 June 2022 (2022-06-16)<br>claims, examples, etc. | 1-6 |
| A | WO 2016/009884 A1 (IDEMITSU KOSAN CO) 21 January 2016 (2016-01-21)<br>claims, examples, etc. | 1-6 |
| P, A | JP 2023-127680 A (ENEOS CORP) 14 September 2023 (2023-09-14)<br>claims, examples, etc. | 1-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2023/041336**

**C. DOCUMENTS CONSIDERED TO BE RELEVANT**

| Category* | Citation of document, with indication, where appropriate, of the relevant passages | Relevant to claim No. |
|---|---|---|
| P, A | JP 2023-87873 A (DAIKIN INDUSTRIES, LTD.) 26 June 2023 (2023-06-26) claims, examples, etc. | 1-6 |
| P, A | JP 2023-57750 A (DAIKIN INDUSTRIES, LTD.) 24 April 2023 (2023-04-24) claims, examples, etc. | 1-6 |

Form PCT/ISA/210 (second sheet) (July 2022)

**INTERNATIONAL SEARCH REPORT**
**Information on patent family members**

International application No.
**PCT/JP2023/041336**

| Patent document cited in search report | Publication date (day/month/year) | Patent family member(s) | Publication date (day/month/year) |
|---|---|---|---|
| WO 2015/186670 A1 | 10 December 2015 | US 2017/0058174 A1<br>claims, examples, etc.<br>EP 3153561 A1<br>CN 106414653 A | |
| WO 2015/186671 A1 | 10 December 2015 | US 2017/0058172 A1<br>claims, examples, etc.<br>EP 3153567 A1<br>CN 106414682 A | |
| JP 2022-89538 A | 16 June 2022 | CN 114659288 A | |
| WO 2016/009884 A1 | 21 January 2016 | US 2017/0166831 A1<br>claims, examples, etc.<br>EP 3170881 A1<br>CN 106661477 A | |
| JP 2023-127680 A | 14 September 2023 | (Family: none) | |
| JP 2023-87873 A | 26 June 2023 | WO 2023/112810 A1 | |
| JP 2023-57750 A | 24 April 2023 | WO 2023/063311 A1<br>JP 7235999 B1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010255966 A